(19)

Europäisches
Patentamt
European
Patent Office
Office européen
des brevets

(11)  **EP 2 555 415 A1**

(12)  **EUROPEAN PATENT APPLICATION**
published in accordance with Art. 153(4) EPC

(43) Date of publication:
**06.02.2013  Bulletin 2013/06**

(51) Int Cl.:
*H02P 6/08* (2006.01)    *B62D 5/04* (2006.01)
*B62D 6/00* (2006.01)    *B62D 101/00* (2006.01)
*B62D 113/00* (2006.01)    *B62D 119/00* (2006.01)

(21) Application number: **10848968.3**

(22) Date of filing: **29.03.2010**

(86) International application number:
**PCT/JP2010/056110**

(87) International publication number:
**WO 2011/121792 (06.10.2011 Gazette 2011/40)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Toyota Jidosha Kabushiki Kaisha
Toyota-shi, Aichi 471-8571 (JP)**

(72) Inventor: **AOKI, Kenichiro
Toyota-shi
Aichi 471-8571 (JP)**

(74) Representative: **Winter, Brandl, Fürniss, Hübner,
Röss, Kaiser, Polte - Partnerschaft
Alois-Steinecker-Strasse 22
85354 Freising (DE)**

(54)  **ELECTRIC POWER STEERING SYSTEM**

(57)    A feedforward control section 152 computes, on the basis of a target current absolute value |i|*, a voltage limit value Vlim of a motor drive circuit 30, and a rotational speed ωr of a motor 20, a phase angle OFF of a voltage vector which represents the output voltage of the motor drive circuit 30 by a d-q coordinate system, the phase angle OFF being a phase angle in relation to the d-axis of the d-q coordinate system. A feedback control section 155 computes a phase angle θFB based on a deviation Δi between the target current absolute value |i|* and the actual current absolute value |i|. A PWM control signal generation section 159 outputs PWM control signals such that the motor drive circuit 30 outputs a three-phase drive voltage whose electrical angle is advanced by a phase angle (OFF + θFB). Thus, in the case where a large reverse input is applied to a steering mechanism 10, the motor 20 is caused to generate a large torque to thereby prevent the steering wheel 11 from being rotated.

FIG.3

**Description**

TECHNICAL FIELD

The present invention relates to an electric power steering system or apparatus which drives and controls an electric motor in accordance with a driver's steering operation, to thereby generate steering assist torque.

BACKGROUND ART

Conventionally, an electric power steering apparatus sets a target assist torque on the basis of a steering operation performed by a driver, and controls the supply of electricity to a motor such that the target assist torque is applied to a steering mechanism. Also, there is known an electric power steering apparatus in which a brushless DC motor is used as such a motor. In the case where a brushless DC motor is employed, in general, the supply of electricity to the motor is controlled through use of vector control represented by a two-phase rotating magnetic flux coordinate system (d-q coordinate system). Such control of the supply of electricity to the motor is carried out by an assist control apparatus including a microcomputer.

In the case where the motor is driven through vector control, the assist control apparatus sets a target assist torque on the basis of, for example, a steering torque applied to a steering wheel by a driver and a vehicle speed, and computes a q-axis target current for generating this target assist torque. Simultaneously, the assist control apparatus computes a d-axis target current, which serves as a field weakening control current. In order to enable the motor to easily rotate at high speed, the d-axis target current is computed such that the field weakening control current increases with the rotational speed of the motor. The assist control apparatus detects the current flowing through the motor, converts it to a current in the d-q coordinate system, and controls the duty ratios of switching elements of a three-phase inverter (motor drive circuit) such that the q-axis current becomes equal to the q-axis target current and the d-axis current becomes equal to the d-axis target current. Such an electric power steering apparatus which drives a motor through vector control represented by the d-q coordinate system is proposed in, for example, Japanese Patent Application Laid-Open *(kokai)* Nos. 2001-187578, 2009-247147, and 2009-247181.

DISCLOSURE OF THE INVENTION

Incidentally, in the case where a vehicle is traveling and a large force (hereinafter referred to as a "reverse input") is applied from a tire to the steering mechanism (e.g., in the case where a front tire bumps against a road surface projection such as a curb), the front wheels (steerable wheels) are turned suddenly. Therefore, the rack bar of the electric power steering apparatus moves in the axial direction, and the steering wheel is rotated at high speed together with a steering shaft connected to the rack bar. Also, when a rack end member provided at an end of the rack bar collides with a stopper formed on a rack housing, a large hitting sound is produced. Accordingly, a driver may have a discomfort feel.

When the steering wheel is rotated by such a reverse input, the rotation of the steering wheel can be decelerated by causing the motor to generate a large torque in the direction opposite the rotation direction of the steering wheel. However, in actuality, since the rotational speed of the steering wheel; i.e., the rotational speed of the motor, is very high, the motor cannot generate a large torque. This problem cannot be avoided because of the characteristics of the brushless DC motor. However, a decrease in torque can be suppressed by means of properly controlling the d-axis current (field weakening current).

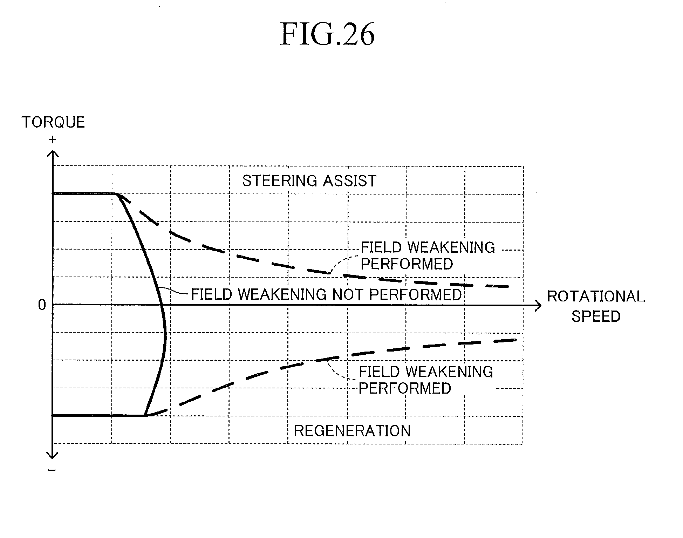

FIG. 26 shows the relation between rotational speed of a motor and torque (maximum torque) which the motor can generate, in a state in which the motor is driven by a fixed drive voltage. In this graph, the torque assumes a positive value when the torque is generated in the same direction as the rotation direction of the motor, and assumes a negative value when the torque is generated in the direction opposite the rotation direction of the motor. Accordingly, the upper half of the graph represents the characteristic of the motor at the time when the motor assists a driver's steering operation, and the lower half of the graph represents the characteristic of the motor at the time when the motor is rotated by an external force (referred to as the "time of regeneration"). The characteristic curves indicated by broken lines represent the theoretical maximum torque which can be obtained when field weakening is performed by supplying the d-axis current set to an optimum value.

As can be understood from this characteristic graph, theoretically, rotation of the steering wheel caused by the reverse input can be restrained to some degree by means of properly controlling the d-axis current. However, in actuality, since the speed at which the motor is rotated by the reverse input is extremely high, a proper torque cannot be generated because of the insufficient computation performance of a microcomputer used in the conventional assist control apparatus. One cause which makes the computation performance of the microcomputer insufficient is that the assist control apparatus performs two-degree-of-freedom control; i.e., controls the d-axis current and the q-axis current. Also, since a calculation formula for obtaining the optimum d-axis target current is complex, the d-axis target current is calculated through use of a map in which a limited number of parameters are used. Therefore, the d-axis target current calculated through use of such a map is not optimum.

Because of these, the rotation of the steering wheel caused by the reverse input cannot be restrained satisfactorily, and a driver may have a discomfort feel. Although the torque can be increased by improving the computation performance (processing speed) of the microcomputer, this results in an increase in cost.

The present invention was accomplished in order to solve the above-mentioned problems, and an object of the present invention is to cause a motor to produce a large torque, when the motor is rotated by a reverse input applied to a steering mechanism, to thereby prevent a steering wheel from being rotated, and to allow such a control to be carried out at low cost.

In order to achieve the above-described object, the present invention provides an electric power steering apparatus which comprises a permanent magnet synchronous motor (20) which is provided in a steering mechanism (10) and which generates a steering assist torque; a drive circuit (30) which outputs a three-phase drive voltage to the motor so as to drive the motor; and a 2-axis current control section (110) which computes, through use of a d-q coordinate system whose d-axis extends along a magnetic field generated by a permanent magnet of the motor and whose q-axis extends perpendicular to the d-axis, drive instruction values for controlling a d-axis current which generates a magnetic field in the d-axis direction and a q-axis current which generates a magnetic field in the q-axis direction, and outputs drive control signals corresponding to the drive instruction values to the drive circuit.

The electric power steering apparatus is characterized by comprising:

a high speed rotation state detection section (S11 to S13) which detects a high speed rotation state in which the motor is rotating at a high speed which is not detected during ordinary steering operation;

a current absolute value control section (150) which computes a phase angle, in relation to the d-axis, of an output voltage vector of the drive circuit represented by the d-q coordinate system, at which the absolute value of motor current flowing through the motor becomes equal to a target current absolute value in a state in which the absolute value of the output voltage vector is set to a voltage limit value of the drive circuit, and outputs to the drive circuit the drive control signals which correspond to the computed phase angle and the voltage limit value; and

control changeover section (S13 to S15) which operates the current absolute value control section in place of the 2-axis current control section when the high speed rotation state is detected by the high speed rotation state detection section.

In the electric power steering apparatus of the present invention, a permanent magnet synchronous motor is provided in the steering mechanism, and a three-phase drive voltage is output from the drive circuit so as to drive the permanent magnet synchronous motor. A three-phase brushless DC motor or the like can be used for the permanent magnet synchronous motor. The permanent magnet synchronous motor (hereinafter simply referred to as the motor) is driven and controlled by the 2-axis current control section. The 2-axis current control section computes drive instruction values for controlling the d-axis current and the q-axis current through current vector control which utilizes the d-q coordinate system whose d-axis extends in a direction along a magnetic field generated by a permanent magnet provided on the rotor of the motor (a direction in which the magnetic field extends) and whose q-axis extends in a direction orthogonal to the d-axis (a direction which advances from the d-axis by an electrical angle of $\pi/2$). The 2-axis current control section outputs drive control signals corresponding to the drive instruction values to the drive circuit.

For example, the 2-axis current control section detects a steering torque which is input from the steering wheel to a steering shaft, and sets a target assist torque corresponding to this steering torque. The 2-axis current control section may be configured to compute a q-axis target current for causing the motor to generate the target assist torque and a d-axis target current for field weakening, compute voltage instruction values for rendering the q-axis current and the d-axis current actually flowing through the motor equal to the q-axis target current and the d-axis target current, and output PWM control signals corresponding to the voltage instruction values to the drive circuit. Preferably, the d-axis target current is set such that, when the rotational speed (angular speed) of the motor becomes high, the degree of field weakening increases as the rotational speed increases.

In the case where a vehicle is traveling and a reverse input is applied to the steering mechanism as a result of, for example, a front tire bumping against a curb, the front wheels are turned against the driver's intention. The motor rotates as the front wheels turn. If the reverse input is large, the rotational speed of the motor becomes very high, and the steering wheel is rotated at high speed. In the case where the motor rotates at high speed, because of the characteristics of the motor, the torque which the motor can output becomes small due to the influence of counter electromotive force. If the motor is caused to generate a torque as large as possible in the direction opposite the rotation direction of the motor, the rotation of the steering wheel can be decelerated. However, since the drive frequency of the drive circuit (the frequency of sine waves of three-phase drive voltages) increases as the rotational speed of the motor increases, in the case of the current vector control performed by the 2-axis current control section, control delay occurs, and the torque which can be generated by the motor decreases.

In order to solve such a problem, in the present invention, the high speed rotation state detection section detects a high speed rotation state in which the motor is rotating at a high speed which is not detected during ordinary steering operation. When the high speed rotation state of the motor is detected, the control changeover section operates the current absolute value control section in place of the 2-axis current control section.

The current absolute value control section computes a phase angle, in relation to the d-axis, of the output voltage vector of the drive circuit represented by the d-q coordinate system, at which the absolute value of the motor current flowing through the motor becomes equal to the target current absolute value in a state in which the absolute value of the output voltage vector is set to the voltage limit value of the drive circuit. The current absolute value control section then outputs to the drive circuit the drive control signals which correspond to the computed phase angle and the voltage limit value. That is, the current absolute value control section performs single-degree-of-freedom control for controlling the absolute value of the motor current only, unlike the 2-axis current control section which performs two-degree-of-freedom control so as to control the d-axis current and the q-axis current. In this case, an operational object for controlling the absolute value of the motor current is the phase angle (in relation to the d-axis) of the voltage vector (a phase angle which advances from the d-axis toward the q-axis).

Each of the 2-axis current control section and the current absolute value control section repeats an operation of computing drive instruction values (control values for controlling the operation of the drive circuit) and outing drive control signals at intervals corresponding to a predetermined control period (computation period). In the case of the current absolute value control section, the computation amount (the computation amount required for calculating the drive instruction values) per control period can be reduced as compared with the 2-axis current control section, because the current absolute value control section performs single-degree-of-freedom control. Accordingly, the control period of the current absolute value control section can be made shorter than the control period of the 2-axis current control section without increasing the computation performance of a computing unit (e.g., microcomputer), whereby control delay can be reduced. Thus, even when the motor is rotating at high speed, a large torque can be generated.

As a result, according to the present invention, when the steering wheel is rotated by a reverse input, the rotated steering wheel can be braked satisfactorily. In addition, by virtue of this braking operation, the hitting sound generated when a rack end member collides with a stopper can be reduced. Accordingly, a feeling of discomfort felt by a driver can be mitigated. Also, since this braking operation can be implemented without increasing the computing performance of the computing unit, no additional cost is required.

Also, in the case where the control changeover section is configured to operate the current absolute value control section instead of the 2-axis current control section when the driver performs a steering operation at a speed higher than the ordinary operation speed for the purpose of, for example, avoiding an emergency, a large steering assist torque can be generated in the direction in which the driver steers the steering wheel for emergency avoidance. Thus, the driver's steering operation for emergency avoidance becomes easy. Notably, the range of the high speed rotation state detected by the high speed rotation state detection section may be set such that it does not include the rotational speed of the motor at the time of emergency avoidance. In this case, the current absolute value control section operates only when the motor is rotated at high speed by the reverse input.

Another feature of the present invention resides in that the current absolute value control section (150) comprises a rotational speed detection section (164) which detects the rotational speed of the motor; and a phase angle computation section (152) which computes the phase angle of the output voltage vector in relation to the d-axis on the basis of the target current absolute value, the voltage limit value of the drive circuit, and the rotational speed of the motor detected by the rotational speed detection section.

In the present invention, when the high speed rotation state of the motor is detected, the phase angle computation section computes the phase angle of the output voltage vector in relation to the d-axis on the basis of the target current absolute value, which represents a target absolute value of the motor current, the voltage limit value of the drive circuit, and the rotational speed of the motor detected by the rotational speed detection section. The absolute value of the motor current can be computed from a voltage equation of the motor in the d-q coordinate system, while the absolute value and phase angle of the output voltage vector and the rotational speed of the motor are used as parameters. Accordingly, the phase angle (the phase angle of the output voltage vector in relation to the d-axis) at which the absolute value of the motor current becomes equal to the target current absolute value can be computed simply. The drive control signals are set in accordance with the voltage limit value and the phase angle computed by the phase angle computation section. In this case, the drive control signals may be three-phase drive control signals whose phase angle is set to a phase angle obtained by adding the electrical angle of the motor to the phase angle computed by the phase angle computation section.

As a result, according to the present invention, through feedforward control, the phase of the output voltage of the drive circuit can be readily controlled to an angle for rendering the absolute value of the motor current equal to the target current absolute value. Therefore, even when the motor is rotating at high speed, the motor can generate a large torque.

Another feature of the present invention resides in that the current absolute value control section (150) comprises a current detection section (38, 163) which detects the absolute value of the motor current; and a feedback control section (154, 155, 156) which adjusts the phase angle computed by the phase angle computation section, on the basis of a deviation between the target current absolute value and the absolute value of the motor current detected by the current detection section.

In the present invention, when the high speed rotation state of the motor is detected, the feedback control section adjusts the phase angle computed by the phase angle computation section, on the basis of the deviation between the target current absolute value and the absolute value of the motor current detected by the current detection section. Accordingly, the influences of disturbance and a model error associated with the feedforward control can be removed through compensation, whereby the phase of the output voltage of the drive circuit can be set more properly. As a result, when the motor is rotating at high speed, the motor can generate a larger torque.

Another feature of the present invention resides in that the feedback control section comprises a direction determination section (154) which determines whether or not a direction in which the motor is rotating coincides with a direction in which torque is generated by the motor. Then, the feedback control section adjusts the phase angle such that, in the case where the rotation direction of the motor coincides with the direction in which the torque is generated, the phase angle is increased when the detected absolute value of the motor current is smaller than the target current absolute value, and is decreased when the detected absolute value of the motor current is greater than the target current absolute value, and in the case where the rotation direction of the motor does not coincide with the direction in which the torque is generated, the phase angle is decreased when the detected absolute value of the motor current is smaller than the target current absolute value, and is increased when the detected absolute value of the motor current is greater than the target absolute current value.

In the present invention, the direction determination section determines whether or not the direction in which the motor is rotating coincides with the direction in which torque is generated by the motor. The direction in which the torque is generated by the motor can be detected from the steering torque applied to the steering mechanism. The direction in which the motor is rotating can be detected from the rotational speed of the motor. The case where the motor is in the high speed rotation state and the direction in which the motor is rotating coincides with the direction of the generated torque corresponds to the case where the driver performs a steering operation for emergency avoidance. In such a case, the feedback control section increases the phase angle (which is computed by the phase angle computation section) when the absolute value of the motor current is smaller than the target current absolute value, and decreases the phase angle when the absolute value of the motor current is greater than the target current absolute value. With this operation, the absolute value of the motor current approaches the target current absolute value.

Also, the case where the motor is in the high speed rotation state and the direction in which the motor is rotating does not coincide with the direction of the generated torque corresponds to the case where the motor is rotated by a reverse input applied to the steering mechanism. In such a case, the feedback control section decreases the phase angle when the absolute value of the motor current is smaller than the target current absolute value, and increases the phase angle when the absolute value of the motor current is greater than the target current absolute value. With this operation, the absolute value of the motor current approaches the target current absolute value.

As a result, in the present invention, the motor can be caused to generate proper torque in both the case where the steering wheel is operated for emergency avoidance and the case where the steering wheel is rotated by a reverse input from the road surface.

Another feature of the present invention resides in that the target current absolute value is set to the current limit value of the drive circuit.

According to the present invention, since the target current absolute value is set to the current limit value of the drive circuit; i.e., the maximum current which can be caused to flow through the drive circuit, the maximum torque can be generated by the motor. Therefore, even when a reverse input is applied to the steering mechanism and the steering wheel is rotated suddenly, the maximum braking force can be applied to the steering wheel.

Another feature of the present invention resides in that the high speed rotation state detection section comprises a rotational speed detection section (164) which detects the rotational speed of the motor, and the high speed rotation state detection section determines that the motor is in the high speed rotation state when the detected rotational speed is higher than a reference speed ($\omega$th).

According to the present invention, the high speed rotation state of the motor can be detected simply.

Another feature of the present invention is provision of a reference speed changing section (S12) which decreases the reference speed ($\omega$th) as the rotational acceleration of the motor increases.

In the present invention, as the rotational acceleration of the motor increases, the reference speed changing section decreases the reference speed used for detecting the high speed rotation state of the motor. The rotational acceleration of the motor increases with an external force acting on the motor. For example, in the case where a large reverse input is applied to the steering mechanism as a result of a front tire bumping against a curb, the rotational acceleration of the motor is very large. Accordingly, in this case, the reference speed used for determining the high speed rotation state of the motor decreases. Thus, at an early timing, the current absolute value control section starts its operation instead of the 2-axis current control section. Therefore, a braking period for restraining the rotation of the steering wheel can be prolonged.

In the case where the motor is driven and controlled by the current absolute value control section, the motor is more liable to generate operating noise, because the degree of the field weakening is increased. Generation of such operating noise can be suppressed by increasing the reference speed used for determining the high speed rotation state of the motor. However, in such a case, the 2-axis current control section is not switched to the current absolute value control section at the beginning of a period in which the rotational speed of the motor starts to increase. Therefore, in the case where a large reverse input acts on the steering mechanism, the braking of the steering wheel starts with a delay. In order to solve such a problem, in the present invention, the reference speed is decreased with an increase in the rotational acceleration of the motor. Therefore, the braking of the steering wheel and the suppression of generation of operation noise can be realized at the same time. Notably, the rotational acceleration of the motor is obtained by differentiating the rotational speed with respect to time.

Another feature of the present invention is provision of a reference speed changing section (S12) which decreases the reference speed as a steering torque input to the steering mechanism increases.

In the case where the motor is rotated by a reverse input, the greater the reverse input, the greater the steering torque input to the steering mechanism. In view of this, in the present invention, the reference speed is decreased with an increase in the steering torque. Therefore, the braking of the steering wheel and the suppression of generation of operation noise can be realized at the same time. Notably, the expression "an increase in the steering torque" encompasses not only an increase in the steering torque itself, but also an increase in a control value (e.g., a motor current instruction value, an assist torque instruction value, or the like) which is set in accordance with the steering torque.

Another feature of the present invention is provision of a second high speed rotation state detection section (S21) which detects a state in which the rotational speed detected by the rotational speed detection section is higher than a second reference speed ($\omega$th2) which is higher than the above-mentioned reference speed; and a second phase angle computation section (201) which stores a map defining the relation between the rotational speed of the motor and the phase angle of the output voltage vector in relation to the d-axis and which computes the phase angle from the rotational speed of the motor detected by the rotational speed detection section, while referring to the map, when the second high speed rotation state detection section detects the state in which the rotational speed of the motor is higher than the second reference speed.

In a state in which the motor is rotating at an extremely high speed, the current flowing through the motor hardly changes even when the phase angle changes somewhat. Therefore, strict current control is not required. In view of this, in the present invention, in the case where the rotational speed of the motor is higher than the second reference speed, which is higher than the above-mentioned reference speed, the second phase angle computation section computes the phase angle of the output voltage vector in relation to the d-axis through use of the map which defines the relation between the rotational speed of the motor and the phase angle of the output voltage vector in relation to the d-axis. The second phase angle computation section computes the phase angle at intervals corresponding to a predetermined control period (computation period). Since the second phase angle computation section computes the phase angle by making use of the map, the computation amount of the second phase angle computation section per control period is smaller than that of the above-mentioned phase angle computation section. Accordingly, the control period of the second phase angle computation section can be made shorter than that of the above-mentioned phase angle computation section without increasing the computation performance of a computing unit (e.g., microcomputer), whereby control delay can be suppressed even when the motor is rotating at extremely high speed.

Notably, in the above description, parenthesized symbols are used merely for facilitating understanding of the invention, and the constituent elements of the invention are not limited to those in the following embodiments denoted by the symbols.

BRIEF DESCRIPTION OF THE DRAWINGS

FIG. 1 is a schematic diagram of an electric power steering apparatus.
FIG. 2 is a functional block diagram representing the processing of a microcomputer of an assist ECU in a normal control mode.
FIG. 3 is a functional block diagram representing the processing of the microcomputer of the assist ECU in a high speed rotation control mode.
FIG. 4 is a graph showing an assist torque map.
FIG. 5 is a graph showing a field weakening map.
FIG. 6 is a voltage vector diagram for the case where field weakening is not performed.
FIG. 7 is a voltage vector diagram for the case where field weakening is performed.

FIG. 8 is a voltage vector diagram for the case where a motor generates the maximum torque in the positive direction.

FIG. 9 is a voltage vector diagram for the case where the motor generates the maximum torque in the negative direction.

FIG. 10 is a voltage vector diagram showing a principle according to which the absolute value of current changes with a change in phase angle.

FIG. 11 is a voltage vector diagram showing a phase limiter range.

FIG. 12 is a flowchart representing a mode changeover control routine.

FIG. 13 is a graph showing a threshold setting map.

FIG. 14 is a graph showing a threshold setting map of another example.

FIG. 15 is a graph showing change in rotational speed, change in rotational acceleration, and change in threshold.

FIG. 16 is a graph showing the output characteristic of the motor in the case where control is performed only in the normal control mode (no control delay).

FIG. 17 is a graph showing the output characteristic of the motor in the case where control is performed only in the normal control mode (control delay is present).

FIG. 18 is a graph showing the output characteristic of the motor in the embodiment.

FIG. 19 is a voltage vector diagram for the case where the motor is rotated at an extremely high speed.

FIG. 20 is a flowchart representing a mode changeover control routine according to a second embodiment.

FIG. 21 is a functional block diagram representing the processing of the microcomputer of the assist ECU in a second high speed rotation control mode according to the second embodiment.

FIG. 22 is a graph showing a phase angle setting map according to the second embodiment.

FIG. 23 is a graph showing the output characteristic of the motor in the second embodiment.

FIG. 24 is a graph showing the output characteristic of the motor in the case where control is performed only in the normal control mode (no control delay).

FIG. 25 is a functional block diagram representing the processing of the microcomputer of the assist ECU in a high speed rotation control mode according to a third embodiment.

FIG. 26 is a graph showing the theoretical output characteristic of the motor.


BEST MODE FOR CARRYING OUT THE INVENTION

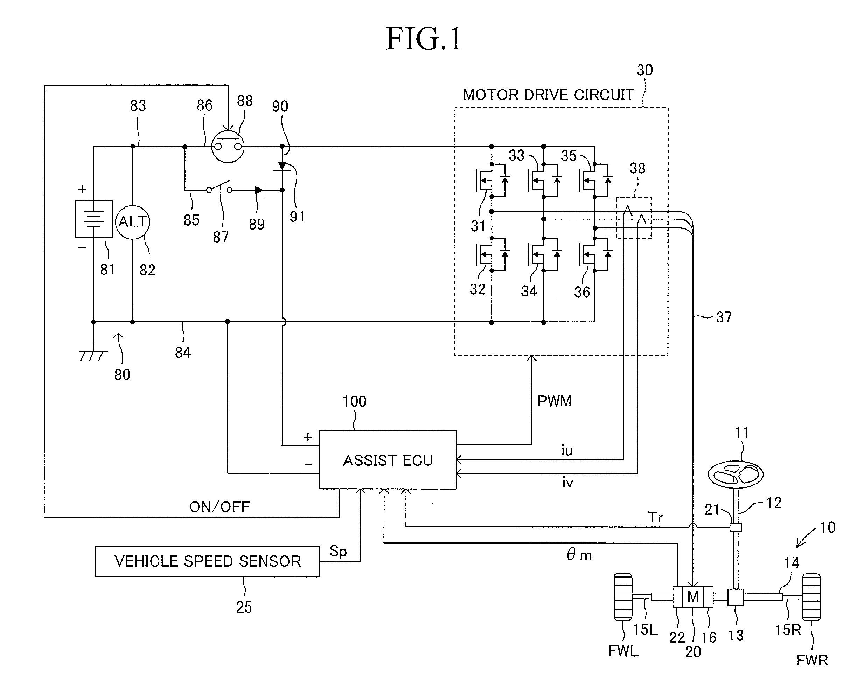

Hereinafter, an electric power steering apparatus according to an embodiment of the present invention will be described with reference to the drawings. FIG. 1 schematically shows the configuration of an electric power steering apparatus for a vehicle according to the embodiment.

This electric power steering apparatus includes, as main components, a steering mechanism 10 which steers steerable wheels in accordance with steering operation of a steering wheel 11; a motor 20 which is mounted in the steering mechanism 10 so as to generate steering assist torque; a motor drive circuit 30 which drives the motor 20; and an electronic control apparatus 100 which controls operation of the motor 20. Hereinafter, the electronic control apparatus 100 will be referred to as an assist ECU 100.

The steering mechanism 10, which steers left and right front wheels FWL and FWR in accordance with rotational operation of the steering wheel 11, includes a steering shaft 12 whose upper end is connected to the steering wheel 11 for integral rotation therewith. A pinion gear 13 is connected to the lower end of the steering shaft 12 for integral rotation therewith. The pinion gear 13 is in meshing engagement with the rack teeth formed on a rack bar 14, thereby constituting a rack-and-pinion mechanism in cooperation with the rack bar 14. Knuckles (unillustrated) of the left and right front wheels FWL and FWR are steerably connected to the opposite ends of the rack bar 14 via tie rods 15L and 15R. The left and right front wheels FWL and FWR are steered leftward or rightward in accordance with an axial displacement of the rack bar 14, which results from rotation of the steering shaft 12 about its axis.

The motor 20 is assembled to the rack bar 14. The motor 20 corresponds to the permanent magnet synchronous motor of the present invention. In the present embodiment, a brushless three-phase DC motor is used as a typical example of the permanent magnet synchronous motor. A rotary shaft of the motor 20 is connected to the rack bar 14 via a ball-screw mechanism 16 in a power transmissible manner. Rotation of the rotary shaft of the motor 20 applies a steering force to the left and right front wheels FWL and FWR so as to assist steering operation. The ball-screw mechanism 16 serves as a speed reducer and a rotation-rectilinear motion converter. The ball-screw mechanism 16 reduces the rotational speed of the motor 20, converts rotation of the rotary shaft of the motor 20 to a rectilinear motion, and transmits the rectilinear motion to the rack bar 14.

A steering torque sensor 21 is provided on the steering shaft 12. The steering torque sensor 21 detects the torsion angle of a torsion bar (unillustrated) inserted in the middle of the steering shaft 12 through use of, for example, a resolver, and detects the steering torque Tr applied to the steering shaft 12 from the detected torsion angle. The steering torque Tr represents not only the magnitude of the steering torque applied to the steering shaft 12 but also the direction in which the steering wheel 11 is rotated according to whether it assumes a positive or negative value. Notably, in the present embodiment, the torsion angle of the torsion bar is detected by the resolver; however, it may be detected by means of another rotational angle sensor or the like.

A rotational angle sensor 22 is provided for the motor 20. This rotational angle sensor 22 is incorporated in the motor 20, and outputs a detection signal corresponding to the rotational angle position of the rotor of the motor 20. The rotational angle sensor 22 is composed of, for example, a resolver or a Hall sensor. The rotational angle sensor 22 outputs a detection signal corresponding to the rotational angle $\theta m$ of the motor 20 to the assist ECU 100. The assist ECU 100 computes the electrical angle $\theta r$ of the motor 20 from the detection signal. Notably, the electrical angle $\theta r$ of the motor 20 may be estimated on the basis of the counter electromotive force generated by the motor 20 without using the rotational angle sensor 22.

The motor drive circuit 30 is a three-phase inverter circuit which includes six switching elements 31 to 36, each of which is formed of a MOS-FET (Metal Oxide Semiconductor Field Effect Transistor). Specifically, the motor drive circuit 30 is composed of three parallely-connected circuits: a circuit formed of a first switching element 31 and a second switching element 32 which are connected in series; a circuit formed of a third switching element 33 and a fourth switching element 34 which are connected in series; and a circuit formed of a fifth switching element 35 and a sixth switching element 36 which are connected in series. A power supply line 37 extends from a point between two switching elements of each of the series-connected circuits (31 to 32, 33 to 34, and 35 to 36) to the motor 20.

The motor drive circuit 30 is provided with a current sensor 38 which detects the currents flowing to the motor 20. This current sensor 38 detects the magnitudes and directions (polarity) of currents of any two phases (e.g., U-axis and V-axis) among three phases, and outputs the signals representing the detected currents iu and iv to the assist ECU 100. In the present embodiment, the current sensor 38 detects currents of only two phases because the W-phase current iw can be computed from the U-axis and V-axis currents iu and iv (iw = -(iu+iv)). However, the current sensor 38 may detect all the currents of the three phases.

The gates of the switching elements 31 to 36 of the motor drive circuit 30 are connected to the assist ECU 100, and the duty ratios of the switching elements 31 to 36 are controlled by PWM control signals output from the assist ECU 100. Thus, the drive voltage of the motor 20 is controlled.

The assist ECU 100 is mainly formed of a microcomputer including a CPU, ROM, RAM, etc. The assist ECU 100 is connected to the steering torque sensor 21, the rotational angle sensor 22, the current sensor 38, and a vehicle speed sensor 25 for detecting the vehicle speed so as to receive, from these sensors, detection signals representing the steering torque Tr, the rotational angle $\theta m$, the motor currents iu and iv, and the vehicle speed Sp. The assist ECU 100 controls the duty ratios of the switching elements 31 to 36 of the motor drive circuit 30 on the basis of the received detection signals so as to obtain an optimum assist torque (hereinafter simply referred to as assist torque) corresponding to a driver's steering operation.

Next, there will be described the power supply system of the electric power steering apparatus. The electric power steering apparatus receives electricity from an onboard power supply apparatus 80. The onboard power supply apparatus 80 is composed of a main battery 81 and an alternator 82 which are connected in parallel. The main battery 81 is an ordinary car battery having a rated output voltage of 12 V. The alternator 82 has a rated output voltage of 14 V and generates electricity when rotated by the engine. A power supply source line 83 and a ground line 84 are connected to the onboard power supply apparatus 80. The power supply source line 83 branches into a control system power supply line 85 and a drive system power supply line 86. The control system power supply line 85 serves as a power supply line for supplying power to the assist ECU 100. The drive system power supply line 86 serves as a power supply line for supplying power to both the motor drive circuit 30 and the assist ECU 100.

An ignition switch 87 is connected to the control system power supply line 85. A main power supply relay 88 is connected to the drive system power supply line 86. This main power supply relay 88 turns on in response to a control signal from the assist ECU 100, to thereby form a circuit for supplying power to the motor 20. The control system power supply line 85 is connected to a positive power supply terminal of the assist ECU 100, and is also connected, via a connection line 90, to the drive system power supply line 86 at the load side of the main power supply relay 88. On the load side (on the side toward the ECU 100) of the ignition switch 87, a diode 89 is disposed in the control system power supply line 85 in such an orientation that its anode is located on the side toward the onboard power supply apparatus 80. A diode 91 is disposed in the connection line 90 in such an orientation that its anode is located on the side toward the drive system power supply line 86. Accordingly, the circuit is configured such that power can be supplied from the drive system power supply line 86 to the control system power supply line 85 via the connection line 90 but cannot be supplied from the control system power supply line 85 to the drive system power supply line 86. The drive system power supply line 86 and the ground line 84 are connected to the power input section of the motor drive circuit 30. In addition, the ground line 84 is also connected to the ground terminal of the assist ECU 100.

Next, there will be described control of the motor 20, which is performed by the assist ECU 100. The assist ECU 100 performs current vector control through use of a d-q coordinate system, thereby controlling rotation of the motor 20. Notably, the d-q coordinate system has a d-axis which extends in the direction in which the magnetic field of the permanent magnet provided on the rotor of the motor 20 extends and a q-axis which extends in the direction orthogonal to the d-axis (in the direction which advances from the d-axis by an electrical angle of $\pi/2$). The d-axis component of the current vector is called d-axis current, and the q-axis component thereof is called q-axis current. The q-axis current serves to generate motor torque. Meanwhile, the d-axis current does not serve to generate motor torque, and is used for field-weakening control.

When performing the above-described current vector control, the assist ECU 100 determines the d-q coordinate system by detecting an electrical angle $\theta r$. This electrical angle $\theta r$ can be obtained from a rotational angle signal output from the rotational angle sensor 22 and representing the rotational angle detected thereby. The electrical angle $\theta r$ is an angle formed between the axis that passes through the U-phase coil and the d-axis.

The assist ECU 100 selectively operates in either of two control modes: a normal control mode for the case where the motor 20 is rotating at a speed lower than a certain rotational speed which does not exceed during ordinary steering operation; and a high speed rotation control mode for the case where the motor 20 is rotating at a speed higher than the certain rotational speed. The condition for switching the control between these two modes will be described later.

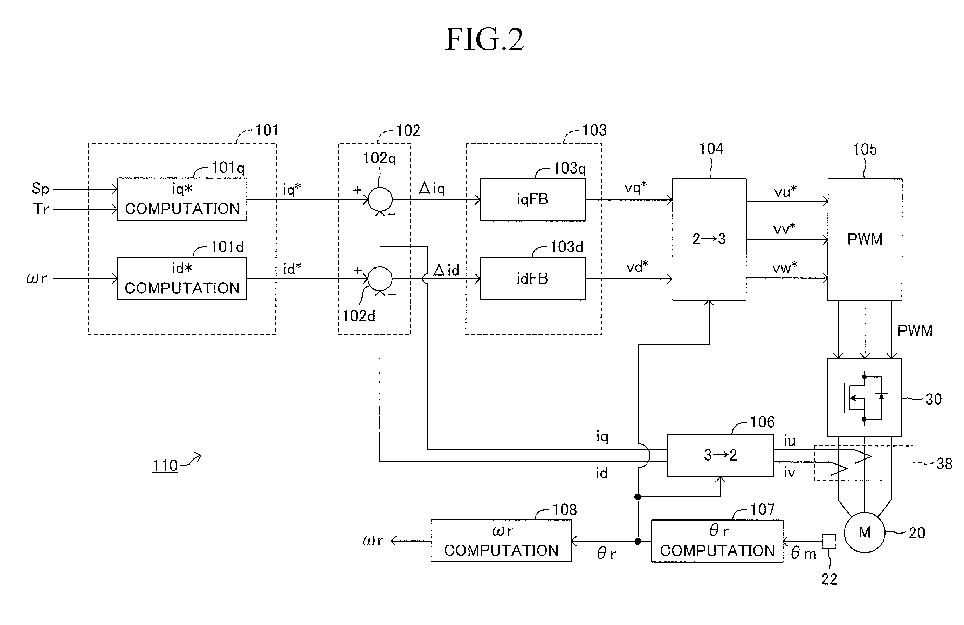

First, the normal control mode will be described. FIG. 2 is a functional block diagram showing functions which are realized by program control performed by the microcomputer of the assist ECU 100 in the normal control mode. The assist ECU 100 has a 2-axis current control section 110 which operates in the normal operation mode. The 2-axis current control section 110, which corresponds to the 2-axis current control section of the present invention, includes a 2-axis current instruction section 101, a deviation computation section 102, a feedback control section 103, a 2-phase/3-phase coordinate conversion section 104, a PWM control signal generation section 105, a 3-phase/2-phase coordinate conversion section 106, an electrical angle computation section 107, and a rotational speed computation section 108.

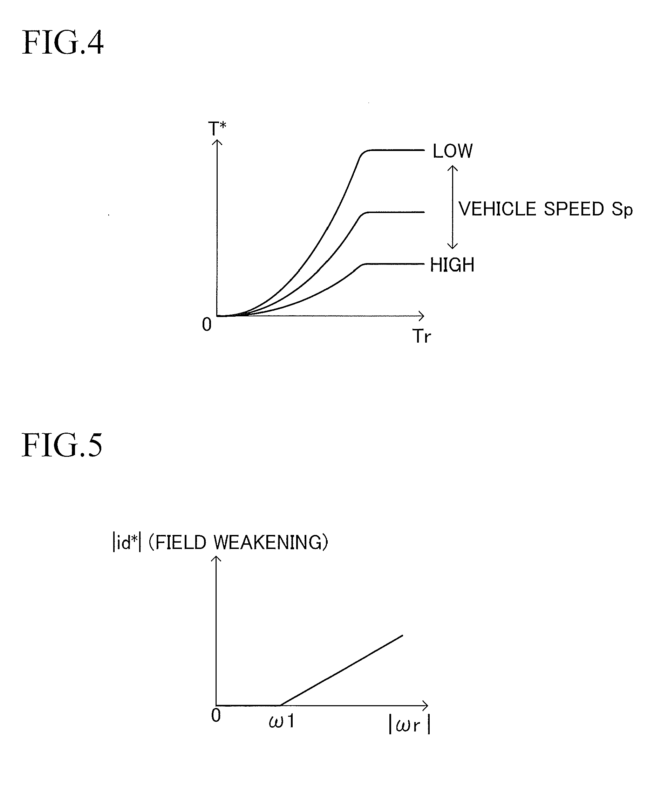

The 2-axis current instruction section 101 includes a q-axis current computation section 101q which computes a q-axis instruction current $i_q^*$ and a d-axis current computation section 101d which computes a d-axis instruction current $i_d^*$. The q-axis current computation section 101q receives the steering torque Tr output from the steering torque sensor 21 and the vehicle speed Sp output from the vehicle speed sensor 25, and computes a target assist torque T* with reference to an assist map shown in FIG. 4. In this case, the target assist torque T* is set such that it increases with the steering torque Tr and decreases as the vehicle speed Sp increases. This target assist torque T* is set in the same direction (identified by a sign) as that of the steering torque Tr. The q-axis current computation section 101q divides the target assist torque T* by a torque constant in order to compute a q-axis instruction current $i_q^*$ (q-axis target current) in the d-q coordinate system.

The d-axis current computation section 101d receives a rotational speed $\omega r$ of the motor 20, which has been computed by the rotational speed computation section 108 described later, and computes a d-axis instruction current $i_d^*$ (d-axis target current) with reference to the field weakening map shown in FIG. 5. When the magnitude $|\omega r|$ of the rotational speed $\omega r$ is equal to or less than the set value $\omega 1$, the d-axis instruction current $i_d^*$ is set to zero ($i_d^* = 0$). When the magnitude $|\omega r|$ of the rotational speed $\omega r$ is greater than the set value $\omega 1$, the d-axis instruction current $i_d^*$ is set such that the field weakening level increases with $|\omega r|$. Notably, the d-axis current used for field weakening control assumes a negative value.

In the present description, when the magnitude of a detection value or computation value having a polarity is discussed, that value is assumed to represent an absolute value having no polarity (positive or negative sign).

The q-axis instruction current $i_q^*$ and the d-axis instruction current $i_d^*$ computed as described above are output to the deviation computation section 102. The deviation computation section 102 includes a q-axis current deviation computation section 102q and a d-axis current deviation computation section 102d. The q-axis current deviation computation section 102q computes a deviation $\Delta i_q$ by subtracting a q-axis actual current iq from the q-axis instruction current $i_q^*$. The d-axis current deviation computation section 102d computes a deviation $\Delta i_d$ by subtracting a d-axis actual current $i_d$ from the d-axis instruction current $i_d^*$.

The q-axis actual current iq and the d-axis actual current $i_d$ are obtained by converting the detected 3-phase currents iu, iv, and iw that actually flowed through the coils of the motor 20 to 2-phase currents in the d-q coordinate system. This conversion from the 3-phase currents iu, iv, and iw to the 2-phase currents $i_d$ and iq in the d-q coordinate system is carried out by the 3-phase/2-phase coordinate conversion section 106. The 3-phase/2-phase coordinate conversion section 106 receives the electrical angle $\theta r$ output from the electrical angle computation section 107, and converts the 3-phase currents iu, iv, and iw (= -(iu+iv)) detected by the current sensor 38 to the 2-phase currents id and iq in the d-q coordinate system.

A conversion matrix C for conversion from the 3-phase coordinate system to the d-q coordinate system is expressed by the following expression (1).

$$C = \sqrt{\frac{2}{3}} \begin{bmatrix} \cos\theta r & \cos\left(\theta r - \frac{2}{3}\pi\right) & \cos\left(\theta r + \frac{2}{3}\pi\right) \\ -\sin\theta r & -\sin\left(\theta r - \frac{2}{3}\pi\right) & -\sin\left(\theta r + \frac{2}{3}\pi\right) \end{bmatrix} \quad \cdots (1)$$

The deviations $\Delta i_q$ and $\Delta i_d$ output from the deviation computation section 102 are output to the feedback control section 103. The feedback control section 103 includes a q-axis current feedback control section 103q and a d-axis current feedback control section 103d. The q-axis current feedback control section 103q computes a q-axis instruction voltage $v_q^*$ such that the q-axis actual current iq follows the q-axis instruction current iq* through proportional-integral control performed using the deviation $\Delta i_q$. The d-axis current feedback control section 103d computes a d-axis instruction voltage $v_d^*$ such that the d-axis actual current $i_d$ follows the d-axis instruction current $i_d^*$ through proportional-integral control performed using the deviation $\Delta i_d$.

The q-axis instruction voltage $v_q^*$ and the d-axis instruction voltage $v_d^*$ computed by the feedback control section 103 are output to the 2-phase/3-phase coordinate conversion section 104. The 2-phase/3-phase coordinate conversion section 104 converts the q-axis instruction voltage $v_q^*$ and the d-axis instruction voltage $v_d^*$ to 3-phase instruction voltages vu*, vv*, and vw* on the basis of the electrical angle θr output from the electrical angle computation section 107, and outputs the 3-phase instruction voltages vu*, vv*, and vw* to the PWM signal generation section 105. The 3-phase instruction voltages vu*, vv*, and vw* correspond to the drive instruction values output from the 2-axis current control section of the present invention. The PWM signal generation section 105 outputs PWM control signals corresponding to the 3-phase instruction voltages vu*, vv*, and vw* to the switching elements 31 to 36 of the motor drive circuit 30. Thus, the motor 20 is driven, and the assist torque following the target assist torque T* is applied to the steering mechanism 10.

The rotation detection signal output from the rotational angle sensor 22 is output to the electrical angle computation section 107. The electrical angle computation section 107 computes the electrical angle θr of the motor 20 from the rotation detection signal output from the rotational angle sensor 22, and outputs the computed electrical angle θr to the 3-phase/2-phase coordinate conversion section 106, the 2-phase/3-phase coordinate conversion section 104, and the rotational speed computation section 108. The rotational speed computation section 108 differentiates, with respect to time, the electrical angle θr output from the electrical angle computation section 107 in order to compute the rotational speed ωr of the motor 20, and outputs the computed rotational speed ωr to the d-axis current computation section 101d. Notably, the rotational speed ωr has a sign (+ or -) corresponding to the rotation direction of the motor 20, which allows the determination of the rotation direction from the sign.

The assist ECU 100 controls the duty ratios of the switching elements 31 to 36 of the motor drive circuit 30 through the above-described processing performed by the 2-axis current control section 110. Thus, the supply of power to the motor 20 is controlled to thereby apply the target assist torque T* to the steering mechanism 10.

The above-described processing performed by the 2-axis current control section 110 is repeated at predetermined control intervals corresponding to a control period T1 (computation period) by making use of a timer.

Next, the high speed rotation control mode will be described. The high speed rotation control mode is selected when the motor 20 rotates at a speed higher than the speed below which the motor 20 rotates during ordinary steering operation. When a large reverse input (force) is applied from a tire to the steering mechanism 10 while the vehicle is traveling (e.g., in the case where a front tire bumps against a road surface projection such as a curb), the front wheels are steered suddenly. As a result, the rack bar 14 moves axially, and the steering wheel 11 rotates at high speed along with the steering shaft 12 connected to the rack bar 14. At this time, since the motor 20 is also rotated at high speed, the assist ECU 100 changes its operation mode from the normal control mode to the high speed rotation control mode.

In the present embodiment, the high speed rotation control mode is selected even in the case where a driver performs steering operation at a speed higher than the ordinary operation speed for emergency avoidance, thereby generating large assist torque. However, since the main object of the high speed rotation control mode is to suppress the rotation of the steering wheel 11 due to a reverse input (force), the high speed control mode will now be described focusing on suppression of the rotation of the steering wheel 11.

In the case where the steering wheel 11 is forced to rotate due to the reverse input (force), the rotation thereof can be suppressed if the motor 20 is caused to generate a large torque in a direction opposite to the rotation direction of the steering wheel 11. However, the torque that the motor 20 (three-phase brushless DC motor) can generate decreases as the rotational speed increases due to the following factors.

1. The counter electromotive force generated by the motor 20 is proportional to the rotational speed of the motor 20. Accordingly, when the motor 20 is rotating at high speed, the counter electromotive force exceeds the power supply voltage, thereby preventing the drive current from flowing through the motor 20.

2. If the drive frequency (the frequency of the sinusoidal wave of the motor drive voltage) of the motor drive circuit 30 increases, the impedance of the motor 20 increases due to the inductance of the armature (motor coil), thereby preventing a large current from flowing through the motor 20.

3. In the case where the counter electromotive force generated by the motor 20 has exceeded the withstand voltage of the motor drive circuit 30, failure preventive control is performed for the motor drive circuit 30 by, for example, opening a protection relay (e.g., an open/close relay (unillustrated) provided in the power supply line 37) so as to prevent failure of the motor drive circuit 30. Therefore, the motor 20 cannot generate torque.

4. Reduction in torque due to counter electromotive force can be suppressed by performing field weakening control through application of negative d-axis current. Thus, as shown in FIG. 26, a certain amount of torque can be generated in theory even when the rotational speed of the motor 20 is high. However, when the drive frequency of the motor drive circuit 30 increases with the rotational speed of the motor 20, delay in control of the microcomputer of the assist ECU 100, delay in output of the PWM control signals, and delay in detection of the actual current and electric angle become unignorable. Consequently, the power factor worsens and torque decreases accordingly.

5. In the case where current vector control is performed using the d-q coordinate system, the d-axis current and the q-axis current influence the q-axis voltage and the d-axis voltage, and the degree of the influence is proportional to the rotational speed of the motor 20. Accordingly, when the motor 20 is rotating at high speed, mutual interference occurs between d-axis current control and q-axis current control which are performed in the d-q coordinate system, thereby making it difficult to apply the d-axis current and the q-axis current appropriately.

6. Complicated computation must be performed using the rotational speed, q-axis current, and power supply voltage of the motor 20 as parameters in order to compute the optimum d-axis instruction current for field-weakening control. In order to reduce the computational load on the microcomputer, the assist ECU 100 computes the d-axis instruction current from a map in which only the rotational speed is used. However, since the d-axis instruction current is different from the optimum value, the theoretical maximum torque cannot be generated according to the characteristic shown in FIG. 26.

7. Since the d-axis instruction current for field weakening is generally computed from the map in a feedforward manner, its value is determined taking into account the maximum variations in armature coil resistance, the armature inductance, and the counter voltage constant. Accordingly, it is far more difficult to generate the theoretical maximum torque.

To solve this problem, the assist ECU 100 performs, in the high speed rotation control mode, single-degree-of-freedom control so as to control the absolute value of the motor current only, to thereby cause the motor 20 to generate the maximum torque, without performing two-degree-of-freedom control so as to control the d-axis current and the q-axis current like in the normal control mode. In this case, an operational object for controlling the absolute value of the motor current is the phase angle (in relation to the d-axis) of the voltage vector which represents the output voltage of the motor drive circuit 30 in the d-q coordinate system. In addition, the assist ECU 100 shortens the control period of the microcomputer as compared with that of the normal control mode, thereby reducing the control delay. That is, the computer's computation amount per control period is reduced by decreasing the number of degrees of freedom of control by 1. Thus, a surplus computing power is produced, which allows shortening of the control period. Therefore, the processing capacity of the microcomputer need not be increased.

In the case where the steering wheel 11 is forced to rotate due to the reverse input, the rotational speed of the steering wheel 11 is very high. In such a limited case, it is sufficient to set the torque of the motor 20 (torque to be generated by the motor 20) to the maximum torque; that is, there is no practical problem even if the torque of the motor 20 cannot be controlled to an intermediate level. Accordingly, in the high speed rotation control mode, the computation load of the microcomputer is reduced by setting the torque of the motor 20 to the maximum torque.

Next, there will be described the principle of the operation of causing the motor 20 to generate the maximum torque by controlling the absolute value of the motor current.

Generally, the voltage equation in the d-q coordinate system is expressed by the following expression (2).

$$\begin{bmatrix} v_d \\ v_q \end{bmatrix} = \begin{bmatrix} R+pL & -\omega L \\ \omega L & R+pL \end{bmatrix} \begin{bmatrix} i_d \\ i_q \end{bmatrix} + \begin{bmatrix} 0 \\ \omega\phi \end{bmatrix} \quad \cdots (2)$$

The output torque T of the motor 20 is expressed by the following expression (3).

$$T = \phi \cdot i_q \quad \cdot \cdot \cdot (3)$$

In the expressions (2) and (3),

$v_d$: d-axis voltage (the d-axis component of armature voltage)
$v_q$: q-axis voltage (the q-axis component of armature voltage)
$i_d$: d-axis current (the d-axis component of armature current)
$i_q$: q-axis current (the q-axis component of armature current)
R: armature coil resistance
L: armature inductance
ω: motor rotational speed (electrical angular speed)
φ: counter voltage constant (= torque constant)
p: differential operator (= d/dt)
j: imaginary unit (which represents 90° rotation if the d-axis is considered to be the real axis and the q-axis is considered to be the imaginary axis)

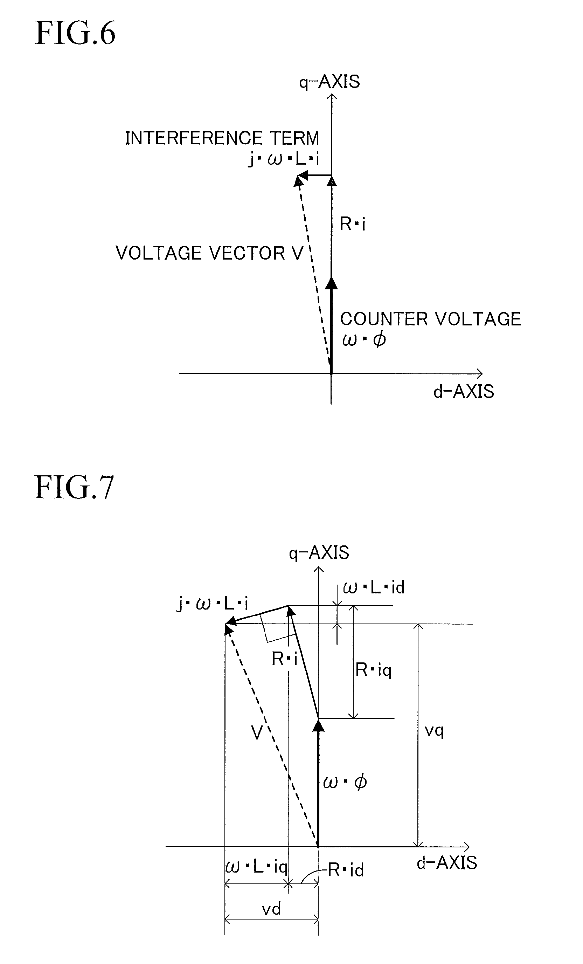

FIG. 6 and FIG. 7 are voltage vector diagrams showing the above-mentioned relation. FIG. 6 indicates the case where field weakening is not performed, and FIG. 7 indicates the case where field weakening is performed. In these voltage vector diagrams, terms including the differential operator are omitted on the assumption that the change in the d-axis current $i_d$ and the change in the q-axis current iq are small.

Hereinafter, the above-mentioned relation will be described on the premise that the motor rotational speed ω is equal to or greater than 0 (ω ≥ 0).

When field weakening is not performed, only the q-axis current iq flows through the motor 20 as the motor current i (i=$i_q$). However, since there exists an interference term arising from the inductance L as shown in FIG. 6, a d-axis voltage corresponding to (ωLi) is required. Accordingly, as indicated by a broken line in FIG. 6, a voltage vector V required to drive the motor 20 is obtained by adding a vector representing the counter voltage (ωφ), a vector representing the voltage drop (Ri) of the coil resistance, and a vector representing the interference term (jωLi). The phase of this voltage vector V is advanced relative to the q-axis.

When field weakening is performed, both the q-axis current iq and the d-axis current $i_d$ (negative direction) flow. As a result, the current vector inclines in relation to the q-axis. Accordingly, as shown in FIG. 7, the voltage vector representing the voltage drop (Ri) of the coil resistance also inclines in relation to the q-axis, and the vector representing the interference term (jωLi) perpendicular to the voltage vector also inclines downward by the same angle as that of the voltage vector. Thus, the q-axis voltage which is a component of the voltage vector V required for driving the motor 20 decreases by (ωLid). As a result, when field weakening is performed, the motor 20 can be rotated at higher speed as compared with the case where field weakening is not performed.

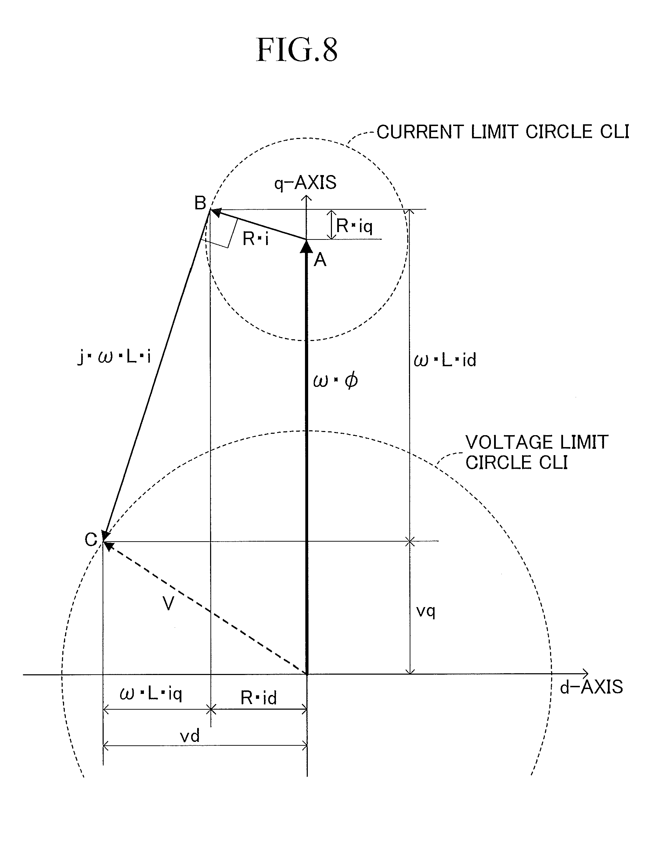

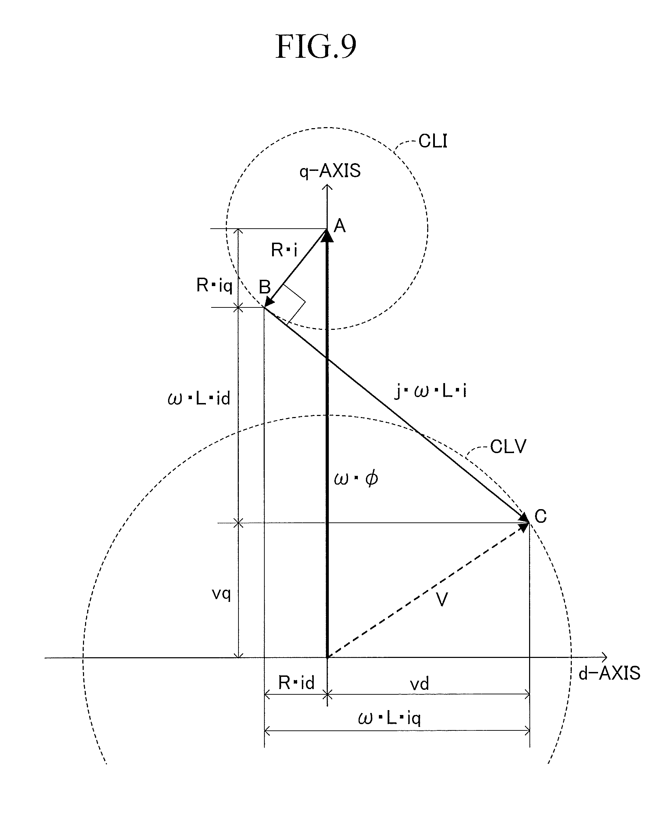

When the motor 20 rotates at high speed, the counter voltage (ωφ) exceeds the voltage limit value of the motor drive circuit 30. Therefore, if field weakening is not performed, a protective device such as a protection relay operates to thereby making it impossible to drive the motor 20. FIG. 8 and FIG. 9 are voltage vector diagrams showing the voltage vector in a high speed rotation range where the counter voltage (ωφ) exceeds the voltage limit value of the motor drive circuit 30. Specifically, FIG. 8 is a voltage vector diagram showing the voltage vector in the case where the motor 20 is generating a maximum positive torque, and FIG. 9 is a voltage vector diagram showing the voltage vector in the case where the motor 20 is generating a maximum negative torque. "Positive torque" refers to torque which is applied in the direction in which the motor 20 is rotating, and "negative torque" refers to torque which is applied in the direction opposite to the direction in which the motor 20 is rotating.

In the d-q coordinate system, the output voltage of the motor drive circuit 30 is represented by the voltage vector V (which corresponds to the output voltage vector of the present invention). Accordingly, as shown in the vector diagrams, if the trajectory (point C) of the voltage vector V is located inside a circle (called a voltage limit circle CLV) which has a center at the origin of the d-q coordinate system and an radius corresponding to the voltage limit value of the motor drive circuit 30, the motor 20 can be driven within the range of the voltage limit value. "Voltage limit value" refers to the maximum value of the output voltage which the motor drive circuit 30 can output.

A current limit value which is the maximum value of the current that can be applied to the motor 20 is determined for the motor drive circuit 30. Accordingly, the motor dive circuit 30 can drive the motor 20 such that the motor current does not exceed the current limit value. In this case, as shown in the vector diagrams, if the trajectory (point B) of the voltage vector (Ri) of the coil resistance is located inside a circle (called a current limit circle CLI) which has a center at the position (point A) (on the q-axis) representing the magnitude of the counter voltage (ωφ) and an radius corresponding to the current limit value x R, the motor 20 can be driven within the range of the current limit value.

The motor 20 can generate the maximum torque when the absolute value of the output voltage of the motor drive circuit 30 (the absolute value of the voltage vector V) is equal to the voltage limit value and the absolute value of the current flowing through the motor 20 is equal to the current limit value. In this case, as shown in FIG. 8 and FIG. 9, the trajectory (point C) of the voltage vector V is located on the voltage limit circle CLV, and the trajectory (point B) of the voltage vector (Ri) of the coil resistance is located on the current limit circle CLI. In the vector diagram, the point A which is at the center of the current limit circle CLI is determined from the counter voltage ($\omega\phi$). If the point B is set at a certain position on the current limit circle CLI, the pint C will be located at a position on a tangential line of the current limit circle CLI which passes through the point B, and the distance between the points B and C corresponds to the value of ($\omega$Li). If the point B is set appropriately, the maximum torque can be generated by causing the point C to be located on the voltage limit circle CLV. In other words, the maximum torque can be generated by setting the position of the point B such that the point C is located on the voltage limit circle.

When positive torque is generated, the q-axis current becomes positive. Accordingly, as shown in FIG. 8, the point B is located above the center of the current limit circle CLI, and the phase of the voltage vector V is on the advancing side in relation to the q-axis. On the other hand, when negative torque is generated, the q-axis current is negative. Accordingly, as shown in FIG. 9, the point B is located below the center of the current limit circle CLI, and the phase of the voltage vector V is on the lagging side in relation to the q-axis. Notably, the counterclockwise direction in the vector diagram corresponds to the advancing direction of the phase of the voltage vector V, and the clockwise direction in the vector diagram corresponds to the lagging direction of the phase of the voltage vector V.

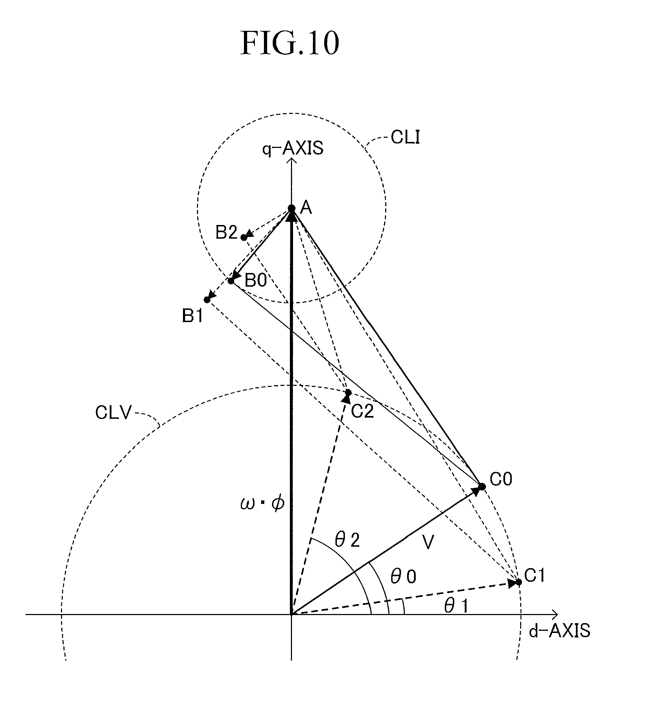

In the high speed rotation control mode of the present embodiment, the phase of the voltage vector is changed in a state that the absolute value of the voltage vector V is set to the voltage limit value (constant), thereby making the absolute value of the current flowing through the motor 20 equal to the target current absolute value (current limit value). Hereinafter, the principle of this control will be described. FIG. 10 is a voltage vector diagram showing the voltage vector in the case where the motor is generating negative torque. There will be considered the case where the voltage phase (the phase angle $\theta$ of the voltage vector V in relation to the d-axis) is changed with the absolute value of the voltage vector V fixed. When the voltage vector (Ri) of the coil resistance becomes AB0 and the voltage vector ($j\omega$Li) of the interference term becomes B0C0 as shown in FIG. 10, the maximum current flows through the motor 20 within the range of the current limit value. At this time, the voltage phase angle $\theta$ is $\theta0$. If the voltage phase angle $\theta$ is changed in the lagging direction until it becomes $\theta1$, the voltage vector V reaches a point C1. At this time, since there is a similarity relation between a triangle AB0C0 and a triangle AB1C1, the point B1 can be obtained easily. Since a distance AC1 is longer than a distance AC0, the current absolute value increases. Consequently, the current absolute value exceeds the current limit value.

In reverse, if the voltage phase angle $\theta$ is changed in the advancing direction until it becomes $\theta2$, the voltage vector V reaches a point C2. In this case, since a distance AC2 is shorter than a distance AC0, the current absolute value decreases. Consequently, the current absolute value becomes smaller than the current limit value.

As can be understood from the foregoing, the current absolute value can be controlled by changing only the voltage phase in a state that the absolute value of the voltage vector V is fixed. When negative torque is generated, the further the voltage phase advances, the smaller the current absolute value.

Even when positive torque is generated, the similar control can be performed. However, the magnitude relation between the voltage phase and the current absolute value is inverted; i.e., the current absolute value increases as the voltage phase advances.

The magnitude relation between the voltage phase and the current absolute value is inverted at a boundary where the line segment AC becomes parallel to the q-axis; that is, the phase angle $\theta$ becomes 90°.

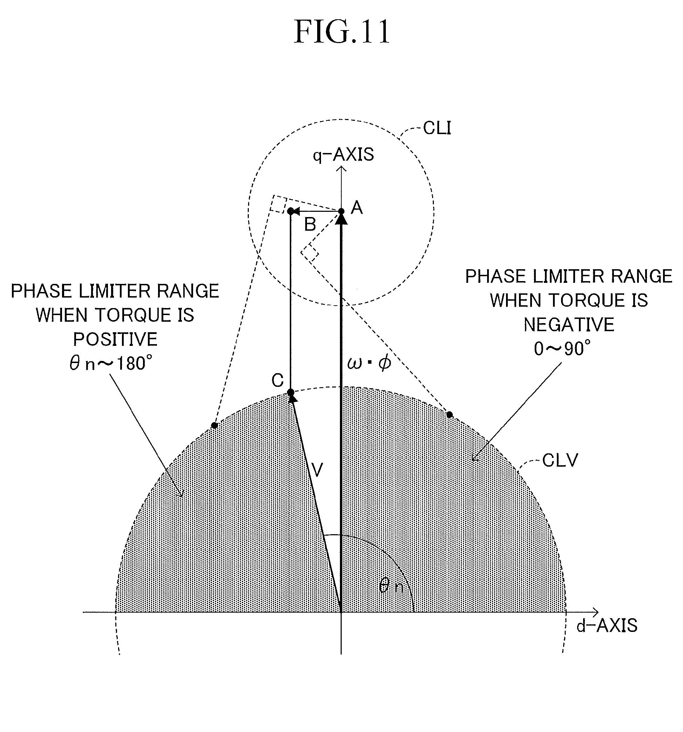

On the other hand, as shown in FIG. 11, the torque generation direction (positive or negative) is reversed at a boundary where the line segment BC becomes parallel to the q-axis; that is, the phase angle $\theta$ becomes $\theta n$ (>90°). Accordingly, the boundary where the magnitude relation between the voltage phase and the current absolute value is inverted is different from the boundary where the torque generation direction is reversed. In view of this, in the present embodiment, there is provided a function for preventing the phase angle $\theta$ from becoming a value between 90° and $\theta n$ ($90° \leq \theta \leq \theta n$) as described later.

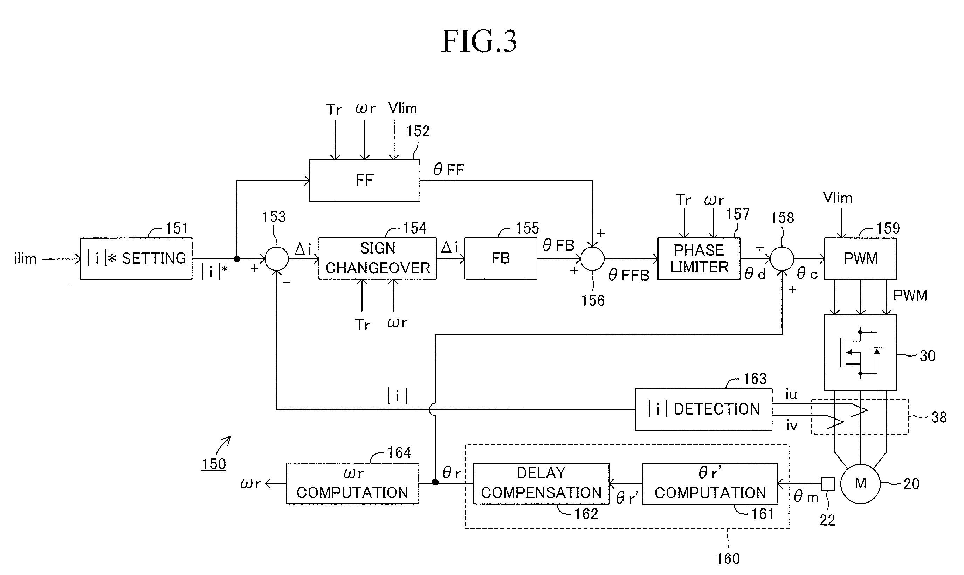

Next, there will be described the processing performed in the high speed rotation control mode. FIG. 3 is a functional block diagram showing functions which are realized by program control performed by the microcomputer of the assist ECU 100 in the high speed rotation control mode. The assist ECU 100 has a current absolute value control section 150 which operates in the high speed rotation control mode. The current absolute value control section 150, which corresponds to the current absolute value control section of the present invention, includes a target current setting section 151, a feedforward control section 152, a deviation computation section 153, a sign changeover section 154, a feedback control section 155, an addition section 156, a phase limiter 157, an addition section 158, a PWM signal generation section 159, an electrical angle computation section 160, a current detection section 163, and a rotational speed computation section 164. Notably, the processing of the current absolute value control section 150 is repeated at control intervals corresponding to a predetermined control period T2 by making use of a timer. This control period T2 is set shorter than the control period T1 of the 2-axis current control section 110 which operates in the normal operation mode.

The target current setting section 151 sets a target current absolute value, which is a target absolute value of the current flowing through the motor 20, and outputs the set target current absolute value $|i|^*$. The current absolute value $|i|$ is expressed by the following expression (4).

$$|i| = \sqrt{i_u^2 + i_v^2 + i_w^2} = \sqrt{i_d^2 + i_q^2} \quad \cdots (4)$$

In the expression (4), iu, iv, and iw are U-phase, V-phase, and W-phase armature currents.

The target current setting section 151 sets the target current absolute value $|i|^*$ as a current limit value ilim (fixed value) of the motor drive circuit 30. The current limit value ilim, which is set in advance in accordance with the specifications of the motor drive circuit 30, etc., is the absolute value of the maximum current which can be caused to flow through the motor drive circuit 30. Notably, in the case where restriction of electricity consumption is required due to an imbalance between the electricity consumed by various onboard electrical loads and the power supply capacity of the onboard power supply apparatus 80, a current limitation instruction specifying the current limit value ilim is output from a power supply controller (unillustrated) to the assist ECU 100. In this case, the target current setting section 151 sets a target current absolute value $|i|^*$ which is slightly lower than the absolute value of the maximum current and which is specified by the current limitation instruction.

The target current absolute value $|i|^*$ is output to the feedforward control section 152 and the deviation computation section 153. The feedforward control section 152 receives the target current absolute value $|i|^*$, the steering torque Tr, the rotational speed ωr, and a voltage limit value Vlim, and computes a phase angle OFF (in relation to the d-axis) of the voltage vector which represents the output voltage of the motor drive circuit 30 in the d-q coordinate system. If the above-described voltage equation expressed by the expression (2) is solved with the time-derivative terms omitted, there is obtained the following relational expression (5) which represents the relation between the output voltage (the absolute value V and phase angle θ of the voltage vector) of the motor drive circuit 30 and the current absolute value $|i|$.

$$|i|^2 = \frac{V^2 + (\omega\phi)^2 - 2\omega\phi\sin\theta}{R^2 + (\omega L)^2} \quad \cdots (5)$$

The feedforward control section 152 obtains, through reverse calculation from the relational expression (5), the phase angle OFF at which the absolute value $|i|$ of the current flowing through the motor 20 becomes equal to the target current absolute value $|i|^*$. In this case, the feedforward control section 152 is only required to substitute the voltage limit value Vlim of the motor drive circuit 30 for V, the magnitude $|\omega r|$ of the rotational speed ωr for ω, and $|i|^*$ for $|i|$. In the present description, ω is assumed to be equal to or greater than 0 ($\omega \geq 0$). Accordingly, in the case where the rotational speed ωr substituted for ω is equal to or less than 0 ($\omega r \leq 0$), the phase angle OFF, etc. can be computed in the same manner as in the case where ω is equal to or greater than 0 ($\omega r \geq 0$), but the fact must be taken into consideration that the phase angle OFF, etc. for the former case and those for the latter case are symmetrical in relation to the d-axis.

Hereinafter, there will be described how the relational expression (5) is derived.

If the terms including the differential operator are omitted from the above-described voltage equation (2) on the assumption that change in the d-axis current $i_d$ and change in the q-axis current iq are small, the following relational expression (6) is obtained.

$$\begin{cases} v_d = Ri_d - \omega Li_q = V\cos\theta \\ v_q = Ri_q + \omega Li_d + \omega\phi = V\sin\theta \end{cases} \quad \cdots (6)$$

Therefore, the following relational expression (7) is obtained.

$$\begin{cases} V \sin \theta - \omega\phi = Ri_q + \omega L i_d \\ V \cos \theta = Ri_d - \omega L i_q \end{cases} \quad \cdots (7)$$

The following relational expression (8) can be obtained by squaring both sides of the expression (7).

$$\begin{cases} V^2 \sin^2 \theta - 2\omega\phi V \sin \theta + (\omega\phi)^2 = R^2 i_q{}^2 + 2R\omega L i_d i_q + (\omega L)^2 i_d{}^2 \\ V^2 \cos^2 \theta = R^2 i_d{}^2 - 2R\omega L i_d i_q + (\omega L)^2 i_q{}^2 \end{cases} \quad \cdots (8)$$

The relational expression (9) can be obtained by adding the upper and lower equations of the expression (8).

$$V^2 - 2\omega\phi V \sin \theta + (\omega\phi)^2 = R^2 |i|^2 + (\omega L)^2 |i|^2 \quad \cdots (9)$$

Thus, the relational expression (5) given above is obtained.
The feedforward control section 152 outputs, as the phase angle OFF, the phase angle θ obtained from this relational expression (5).
Notably, computation of the phase angle OFF from the relational expression (5) has two solutions. That is, when the relational expression (5) is deformed to θ = sin⁻¹(x) so as to calculate the phase angle OFF, sin⁻¹(x) has two solutions within the range from 0° to 180° for a single value of x (0 ≤ x ≤ 1). Therefore, when calculating the phase angle OFF, the feedforward control section 152 determines whether the direction of torque is the positive direction or negative direction. If the direction of the torque is the positive direction; that is, in the state where the motor 20 assists a driver's steering operation, the feedforward control section 152 adopts a solution existing in the range from 90° to 180°. If the direction of the torque is the negative direction; that is, in a regeneration state where the motor 20 is rotated by an external force, the feedforward control section 152 adopts a solution existing in the range from 0° to 90°. Notably, the feedforward control section 152 determines the direction of the torque on the basis of the direction of the steering torque Tr and the rotation direction corresponding to the polarity of the rotational speed ωr. That is, the feedforward control section 152 determines that the direction of the torque is the positive direction when the direction in which the steering torque Tr is applied coincides with the rotation direction corresponding to the polarity of the rotational speed ωr. The feedforward control section 152 determines that the direction of the torque is the negative direction when the direction in which the steering torque Tr is applied does not coincide with the rotation direction corresponding to the polarity of the rotational speed ωr.
In the high speed rotation control mode, not only the feedforward control section 152 but also the feedback control section 155 adjust the phase angle θ such that the absolute value |i| of the current flowing through the motor 20 is equal to the target current absolute value |i|*. The deviation computation section 153 receives the target current absolute value |i|* output from the target current setting section 151 and an actual current absolute value |i| output from the current detection section 163, and computes a deviation Δi (= |i|*-|i|) between these two absolute values. The actual current absolute value |i| is computed by the current detection section 163. The current detection section 163 computes the actual current absolute value |i| on the basis of the three-phase currents iu, iv, and iw (= -(iu+iv)) received from the current sensor 38. The actual current absolute value |i| is calculated in accordance with the following expression (10).
$$|i| = \sqrt{i_u{}^2 + i_v{}^2 + i_w{}^2} = \sqrt{2(i_u{}^2 + i_v{}^2 + i_u i_v)} \quad \cdots (10)$$

The deviation computation section 153 outputs the computed deviation Δi to the sign changeover section 154. The sign changeover section 154 receives the steering torque Tr and the rotational speed ωr in addition to the deviation Δi. The sign changeover section 154 sets the gain to "+1" when the direction in which the steering torque Tr is applied coincides with the rotation direction corresponding to the polarity of the rotational speed ωr; that is, when positive torque is generated in relation to the rotation direction of the motor 20. The sign changeover section 154 sets the gain to "-1" when the direction in which the steering torque Tr is applied does not coincide with the rotation direction corresponding to the polarity of the rotational speed $\omega$r; that is, when negative torque is applied in relation to the rotation direction of the motor 20. As mentioned above, the magnitude relation between the voltage phase and the current absolute value is inverted between the case where positive torque is generated in relation to the rotation direction of the motor 20 and the case where negative torque is generated in relation to the rotation direction of the motor 20. For example, when positive torque is generated, the further the voltage phase advances (the greater the phase angle $\theta$), the larger the current absolute value. When negative torque is generated, the further the voltage phase advances, the smaller the current absolute value. Therefore, the sign changeover section 154 sets a gain corresponding to the direction (positive or negative) in which torque is generated such that the feedback control section 155 (described later) can control the phase angle in a correct direction, and outputs a value obtained by multiplying together the deviation $\Delta$i and the set gain to the feedback control section 155. Hereinafter, the value obtained by multiplying together the deviation $\Delta$i and the set gain will be simply referred to as the deviation $\Delta$i.

The feedback control section 155 computes the phase angle $\theta$FB (in relation to the d-axis) of the voltage vector which represents the output voltage of the motor drive circuit 30 in the d-q coordinate system by performing proportional-integral control (PI control) using the deviation $\Delta$i so that the actual current absolute value $|i|$ follows the target current absolute value $|i|^*$, and outputs the computed the phase angle $\theta$FB. When performing proportional-integral control, the feedback control section 155 computes the phase angle $\theta$FB from the sum of a proportional term and an integral term. The proportional term is obtained by multiplying the deviation $\Delta$i by a proportional gain. The integral term is obtained by integrating a value which is obtained by multiplying the deviation $\Delta$i by an integral gain. In the present embodiment, the feedback control section 155 performs proportional-integral control. However, the feedback control section 155 may be configured so as to perform only proportional control or integral control.

The phase angle $\theta$FB output from the feedback control section 155 and the phase angle $\theta$FF output from the feedforward control section 152 are input to the addition section 156. The addition section 156 adds together the phase angle $\theta$FB and the phase angle $\theta$FF, and outputs the resultant phase angle $\theta$FFB (= $\theta$FF+$\theta$FB). That is, the phase angle $\theta$FFB assumes a value obtained through compensation; i.e., eliminating the error contained in the phase angle $\theta$FF computed by the feedforward control section 152, on the basis of the phase angle $\theta$FB computed by the feedback control section 155.

The phase angle $\theta$FFB output from the addition section 156 is input to the phase limiter 157. The phase limiter 157 receives the steering torque Tr and the rotational speed $\omega$r in addition to the phase angle $\theta$FFB. As mentioned previously, the sign changeover section 154 sets the sign of the phase angle $\theta$FB computed by the feedback control section 155 in accordance with the direction (positive direction or negative direction) of torque. Therefore, in the case where the direction of torque is the positive direction and the phase angle $\theta$ is smaller than 90°, control diverges. Similarly, in the case where the direction of torque is the negative direction and the phase angle $\theta$ exceeds 90°, control also diverges. The phase limiter 157 limits the range of the phase angle $\theta$ in accordance with the direction of torque, thereby preventing control from diverging. FIG. 11 shows the range of the phase angle $\theta$ which is limited by the phase limiter 157. When the direction of torque is the negative direction, the phase limiter 157 limits the phase angle $\theta$ to the range of 0° to 90° (0°$\leq \theta \leq$90°). When the direction of torque is the positive direction, the phase limiter 157 limits the phase angle $\theta$ to the range of $\theta$n to 180° ($\theta$n $\leq \theta \leq$ 180°).

The phase angle $\theta$n can be computed as described below.

As shown in FIG. 11, when the phase angle of the voltage vector V becomes $\theta$n, the q-axis current iq becomes zero. If the terms including the differential operator are omitted from the above-described voltage equation (2) on the assumption that change in the d-axis current $i_d$ and change in the q-axis current iq are small, and iq is considered to be 0 (iq = 0), the following relational expression (11) is obtained.

$$\begin{cases} v_d = Ri_d \\ v_q = \omega Li_d + \omega\phi \end{cases} \quad \cdot\cdot\cdot (11)$$

When the absolute value of the voltage vector V is considered to be V, the expression (11) can be rewritten to the following expression (12).

$$\begin{cases} V\cos\theta n = -Ri \\ V\sin\theta n - \omega Li = \omega\phi \end{cases} \quad \cdot\cdot\cdot (12)$$

Eliminating i's from the expression (12) gives the relational expression (13) for θn.

$$R \sin\theta n + \omega L \cos\theta n = \frac{R\omega\phi}{V} \quad \cdot\cdot\cdot (13)$$

By means of using formulae for combining trigonometric functions, the expression (13) can be rewritten to the following expression (14).

$$\sqrt{R^2 + (\omega L)^2}\, \sin(\theta n + \alpha) = \frac{R\omega\phi}{V} \quad \cdot\cdot\cdot (14)$$

$$\alpha = \cos^{-1}\left(\frac{R}{\sqrt{R^2 + (\omega L)^2}}\right)$$

The phase angle θn can be obtained from the following expression (15) derived from the expression (14).

$$\theta n = \sin^{-1}\left(\frac{R\omega\phi}{V\sqrt{R^2 + (\omega L)^2}}\right) - \cos^{-1}\left(\sqrt{\frac{R^2}{R^2 + (\omega L)^2}}\right) \quad \cdot\cdot\cdot (15)$$

Thus, the phase limiter 157 outputs to the addition section 158 a phase angle instruction value θd, which represents a phase angle obtained by limiting the range of the phase angle θFFB. The addition section 158 adds together the phase angle instruction value θd and the electrical angle θr of the motor 20 which is output from the electrical angle computation section 160 in order to compute a voltage phase instruction value θc (= θd+θr); namely, a phase angle on the armature which is converted from the phase angle instruction value θd. The electrical angle computation section 160 includes an angle computation section 161 and a delay compensation section 162. The angle computation section 161 receives the detection signal which is output from the rotational angle sensor 22 and represents the rotational angle θm of the motor 20, and computes an electrical angle θr' of the motor 20. The delay compensation section 162 compensates the electrical angle θr' computed by the angle computation section 161 by an angle which is proportional to the rotational speed obtained by differentiating the electrical angle θr' with respect time. That is, the delay compensation section 162 compensates the electrical angle θr' such that the electrical angle θr advances by an angle corresponding to the delay time (which corresponds to the rotational speed of the motor 20) taking into account the computation time required for detecting the electrical angle of the motor 20.

The electrical angle computation section 160 outputs, as an electrical angle θr, the electrical angle compensated by the delay compensation section 162 to the addition section 158 and the rotational speed computation section 164. The rotational speed computation section 164 differentiates the electrical angle θr with respect to time in order to compute the rotational speed ωr of the motor 20, and outputs the computed rotational speed ωr to the feedforward control section 152, the sign changeover section 154, and the phase limiter 157.

Notably, the electrical angle computation section 160 may be configured with the delay compensation section 162 omitted. In addition, the electrical angle θr may be estimated on the basis of the counter electromotive force generated by the motor 20 without using the rotational angle sensor 22.

The voltage phase instruction value θc computed by the addition section 158 is output to the PWM signal generation section 159. The PWM signal generation section 159 generates, in accordance with the voltage phase instruction value θc, PWM control signals which are set such that the output voltages of the motor drive circuit 30 have the sinusoidal voltage waves expressed by the following expression (16), and outputs the generated PWM control signals to the switching elements 31 to 36.

$$\begin{cases} V_u = V\sin(\theta_d + \theta_r) \\ V_v = V\sin\left(\theta_d + \theta_r - \dfrac{2\pi}{3}\right) \\ V_w = V\sin\left(\theta_d + \theta_r - \dfrac{4\pi}{3}\right) \end{cases} \quad \cdot\cdot\cdot (16)$$

In this case, since the phase angle instruction value θd output from the phase limiter 157 represents a relative angle from the d-axis determined on the basis of the magnetic pole direction of the motor 20, the phase angle of the 3-phase output voltages becomes an angle θc which is obtained by adding together the electrical angle θr and the phase angle instruction value θd.

Meanwhile, the amplitude V of each sinusoidal wave voltage is determined from the voltage limit value Vlim (constant value) of the motor drive circuit 30. For example, when the voltage limit value Vlim is expressed by the absolute value of the above-described voltage vector (= $\sqrt{(v_d^2 + vq^2)} = \sqrt{(Vu^2 + Vv^2 + Vw^2)}$), the amplitude V of the sinusoidal wave voltage becomes $\sqrt{(2/3)}$ times the voltage limit value Vlim.

In response to the PWM control signals output from the PWM signal generation section 159, the switching elements 31 to 36 operate. Thus, the motor drive circuit 30 outputs three-phase sinusoidal wave voltages.

In the above-described high speed rotation control mode, the phase of the output voltage of the motor drive circuit 30 is set such that the absolute value of the current flowing through the motor 20 becomes equal to the current limit value ilim in the state where the absolute value of the voltage vector V is set to the voltage limit value Vlim. That is, as shown in FIG. 8 and FIG. 9, the phase of the output voltage of the motor drive circuit 30 is set such that the trajectory (point B) of the voltage vector (Ri) (which is obtained by multiplying together the current vector i and the coil resistance R) is located on the current limit circle CLI in the state where the trajectory (point C) of the voltage vector V is located on the voltage limit circle CLV.

In this case, single-degree-of-freedom control is performed so as to control the absolute value of the motor current only. Therefore, the microcomputer's computation amount per control period can be reduced as compared with that of the normal control mode in which two-degree-of-freedom control is performed so as to control the d-axis current and the q-axis current. Thus, the control period of the microcomputer can be shortened as compared with that of the normal control mode, thereby reducing the delay in control. In addition, even in the case where parameters (the armature coil resistance R, the inductance L, and/or the counter voltage constant φ) used in computational expressions vary or disturbance occurs, the optimum voltage phase can be set, because the feedback control section 155 adjusts the phase angle on the basis of the deviation Δi between the absolute value |i| of the current flowing through the motor 20 and the target current absolute value |i|*. Hence, large torque which is approximately the same as the theoretically maximum torque can be generated using an existing microcomputer.

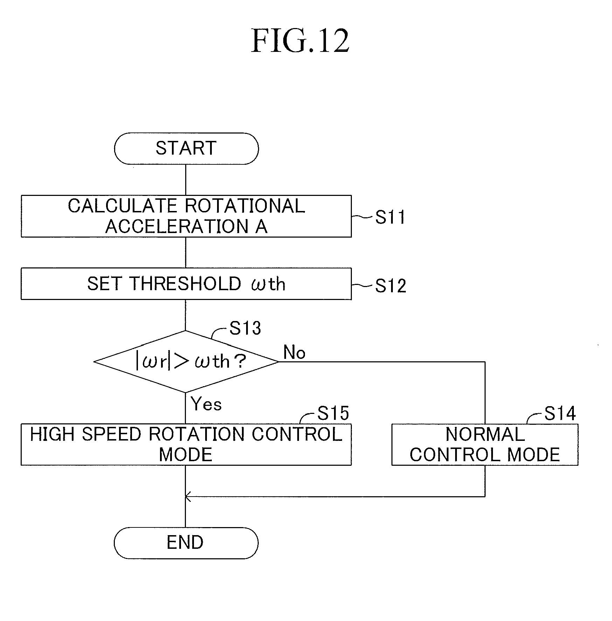

Next, there will be described the processing for switching the control mode between the normal control mode and the high speed rotation control mode. FIG. 12 shows a mode changeover control routine executed by the assist ECU 100. The mode changeover control routine is stored, as a control program, in the ROM of the microcomputer of the assist ECU 100, and is repeatedly executed at predetermined intervals when the ignition key is held at the ON position.

Upon starting the mode changeover control routine, in step S11, the assist ECU 100 differentiates the rotational speed ωr with respect to time in order to compute a rotational acceleration A (= dωr/dt) of the motor 20. Notably, the rotational speed ωr can be computed from the amount of change in the rotational angle θm output from the rotational angle sensor 22 or the amount of change in the electrical angle θr.

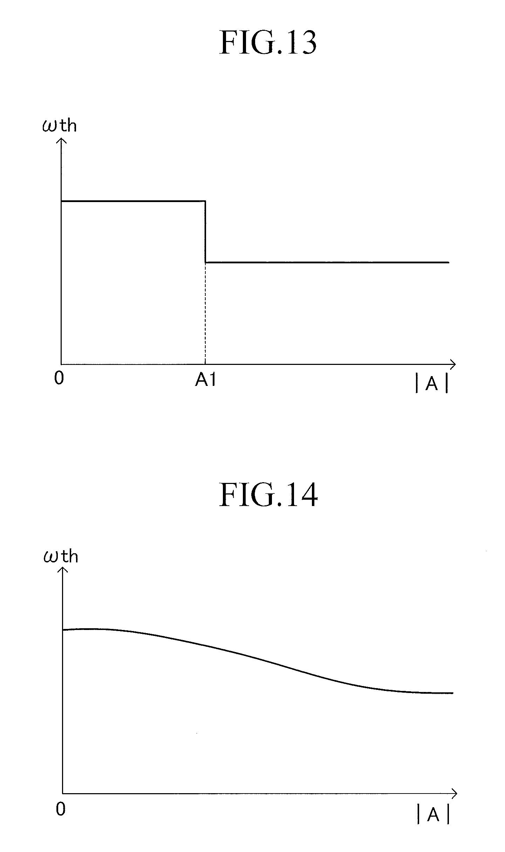

Subsequently, in step S12, the assist ECU 100 sets a threshold ωth with reference to a threshold setting map shown in FIG. 13. This threshold ωth corresponds to the reference speed of the present invention. The threshold setting map is stored in the ROM of the assist ECU 100 as data defining the relation between the magnitude |A| of the rotational acceleration A (hereinafter referred to as the rotational acceleration |A|) and the threshold ωth. In the threshold setting map, when the rotational acceleration |A| is greater than a set value A1, a smaller threshold ωth is set as compared with the case where the rotational acceleration |A| is equal to or less than the set value A1. This threshold ωth is set to a sufficiently large value corresponding to a rotational speed which cannot be detected during ordinary steering operation.

Notably, it is not always necessary for the threshold ωth to be switched between two levels. It is only necessary for the threshold ωth to decrease as the rotational acceleration |A| increases. For example, the threshold setting map shown in FIG. 14 may be used. In this threshold setting map, the threshold ωth is set such that it decreases as the rotational acceleration |A| increases.

Next, in step S13, the assist ECU 100 determines whether or not the magnitude $|\omega r|$ of the rotational speed $\omega r$ (hereinafter referred to as the rotational speed $|\omega r|$) is greater than the threshold $\omega$th. If the rotational speed $|\omega r|$ is equal to or less than the threshold $\omega$th (S13: No), in step S14, the assist ECU 100 selects the normal control mode. If the rotational speed $|\omega r|$ is greater than the threshold $\omega$th (S13: Yes), in step S15, the assist ECU 100 selects the high speed rotation control mode. After selecting a control mode, the assist ECU 100 ends the current execution of the mode changeover routine. The assist ECU 100 repeatedly executes the mode changeover control routine at predetermined intervals, to thereby consistently select a control mode corresponding to the rotational speed $|\omega r|$.

In the high speed rotation control mode, since the field weakening level is increased, the motor 20 is more liable to generate operating noise as compared with the normal control mode. Therefore, desirably, the high speed rotation control mode is selected only when the motor 20 rotates at a high speed that is not detected during ordinary steering operation; for example, when the motor 20 is forced to rotate in the case where a front tire bumps against a road surface projection. Generation of such operating noise can be suppressed by switching the control mode to the high speed rotation control mode only when the rotational speed of the motor 20 exceeds the above-mentioned threshold. However, if an excessively high threshold is set in order to suppress generation of operating noise, the assist ECU 100 cannot quickly switch its control mode to the high speed rotation control mode at the beginning of a period in which the motor 20 starts to increase its rotational speed. Accordingly, the motor 20 cannot generate a large torque. To solve this problem, in the apparatus of the present embodiment, the threshold $\omega$th is changed in accordance with the rotational acceleration $|A|$ of the motor 20.

In the case where a large force is applied to the steering mechanism 10 due to bumping of a front tire against a road surface projection, the rotational speed of the motor 20 increases suddenly. The magnitude of the rotational acceleration of the motor 20 can be considered to increase with the magnitude of an external force. Accordingly, in the mode changeover control routine, when the rotational acceleration $|A|$ of the motor 20 is large, the threshold $\omega$th for switching the control mode is set to a small value such that the assist ECU 100 can quickly enters the high speed rotation control mode. Thus, in the case where a large force is applied from a tire to the steering mechanism 10, the assist ECU 100 can switch its control mode to the high speed rotation control mode instantaneously so as to reduce the rotational speed of the steering wheel 11, thereby reducing the shock. In contrast, when the rotational acceleration $|A|$ is small, the threshold $\omega$th is set to a large value. Thus, for a small reverse input applied to the steering mechanism 10, the assist ECU 100 does not switch its control mode to the high speed rotation control mode until the rotational speed reaches the threshold $\omega$th set to the large value. Thus, the assist ECU 100 is prevented from entering the high speed rotation control mode too frequently. Thus, both the braking of the steering wheel 11 and the suppression of generation of motor operating noise can be realized at the same time.

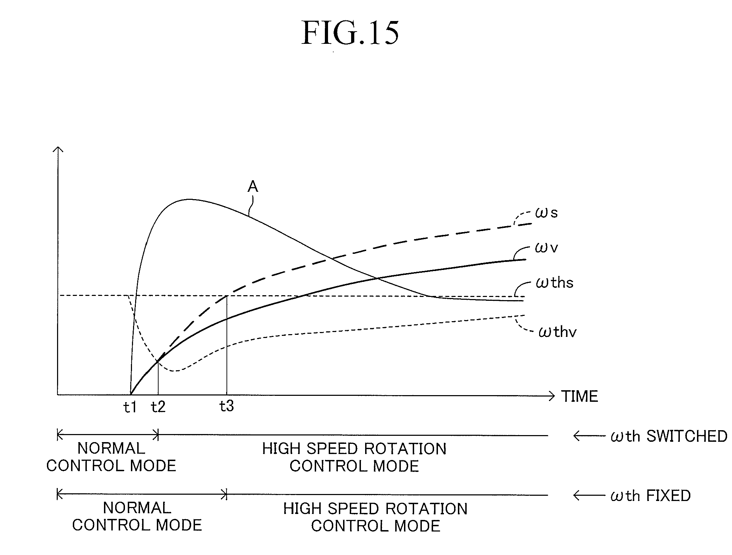

Here, the timing at which the control mode is switched is compared between the case where the threshold $\omega$th is fixed and the case where the threshold $\omega$th is changed in accordance with the rotational acceleration $|A|$. FIG. 15 shows a change in the rotational speed, a change in the rotational acceleration, and a change in the threshold at the time when a large reverse input is applied to the steering mechanism 10 due to bumping of a tire against a road surface projection. In FIG. 15, $\omega$ths represents a fixed threshold, $\omega$s represents a rotational speed of the motor 20 in the case where the control mode is switched using the threshold $\omega$ths, $\omega$thv represents a threshold set with reference to the threshold setting map (FIG. 14), and $\omega$v represents a rotational speed of the motor 20 in the case where the control mode is switched using the threshold $\omega$thv.

When a tire bumps against a road surface projection at a time t1, the motor 20 starts rotating suddenly. In the case where a fixed threshold $\omega$ths is used, the rotational speed $\omega$s exceeds the threshold $\omega$ths at a time t3 and the assist ECU 100 switches its control mode to the high speed rotation control mode. On the other side, in the case where the threshold $\omega$th is set with reference to the threshold setting map (FIG. 14), the threshold $\omega$thv decreases in response to a sudden increase in the rotational acceleration A from the time t1. As a result, the rotational speed $\omega$v exceeds the threshold $\omega$thv at a time t2 which is earlier than the time t3, and the assist ECU 100 enters the high speed rotation control mode. Hence, the period in which the motor 20 generates large negative torque becomes longer and the increase in the rotational speed of the motor 20 can be suppressed further.

Notably, in the present embodiment, the threshold $\omega$th is set such that it decreases as the rotational acceleration $|A|$ of the motor 20 increases. However, the threshold $\omega$th may be set such that it decreases as the steering torque $|Tr|$ increases. In the case where the motor 20 is forced to rotate due to a reverse input, the magnitude $|Tr|$ of the steering torque Tr detected by the steering torque sensor 21 increases with the reverse input. Accordingly, by means of setting the threshold $\omega$th on the basis of the steering torque $|Tr|$ in stead of the rotational acceleration $|A|$, the above-mentioned effect can be achieved. In this case, the horizontal axis of the threshold setting map shown in FIG. 13 or FIG. 14 represents the steering torque $|Tr|$. In addition, the processing of step S11 is changed so as to receive the steering torque Tr from the steering torque sensor 21.

Meanwhile, in the normal control mode, the target assist torque T* (assist torque instruction value) and the q-axis instruction current $i_q$* (motor current instruction value) are set in accordance with the steering torque Tr. The target assist torque T* and the q-axis instruction current $i_q$* increase with the steering torque Tr. Accordingly, the present embodiment may be configured such that the threshold $\omega$th decreases as the target assist torque T* or the q-axis instruction current $i_q$* increases. Even when such a configuration is employed, the above-described effect can be achieved.

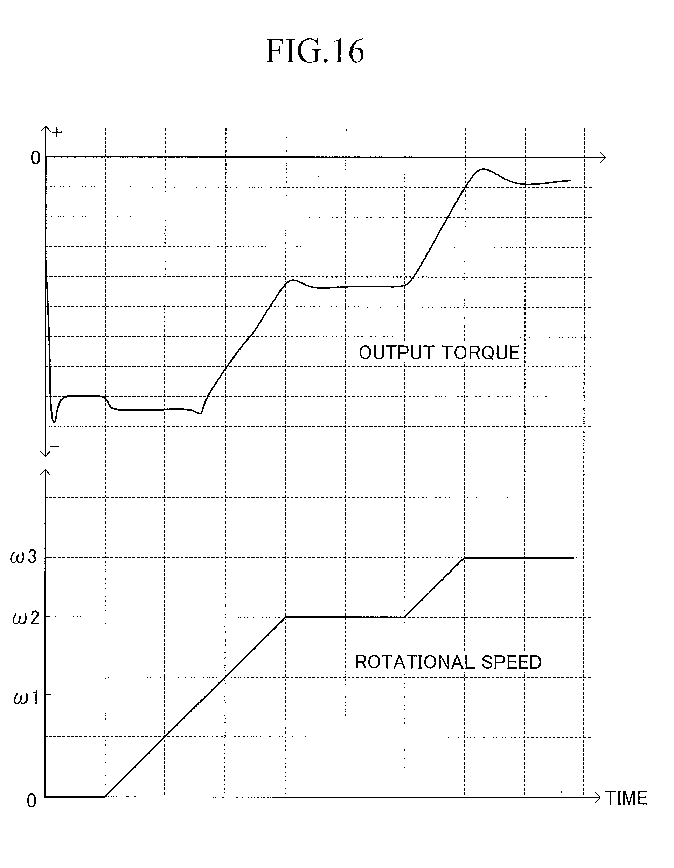

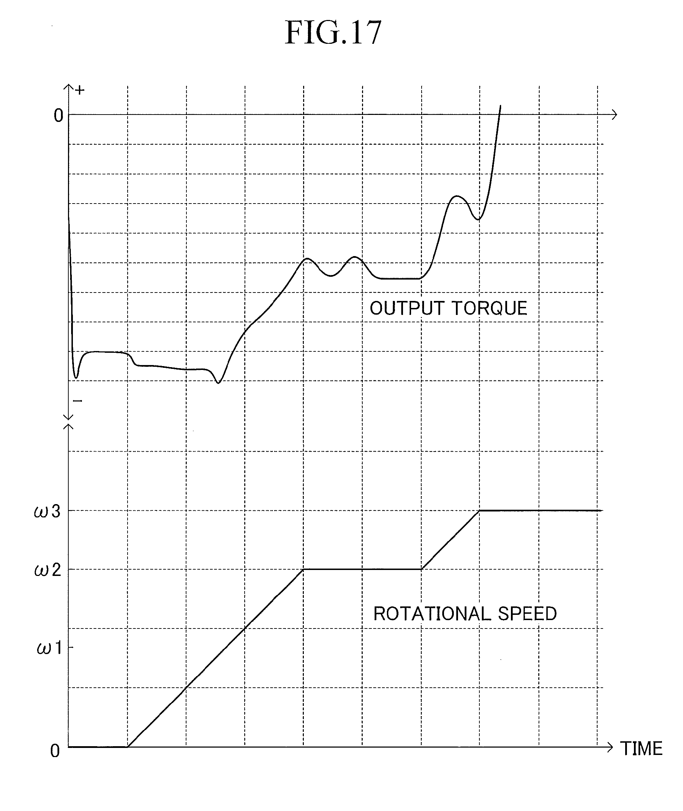

Next, the output torque characteristic of the motor 20 will be described. FIG. 16 to FIG. 18 are graphs showing an output torque characteristic obtained, through simulation, for the case where the motor 20 is rotated by an external force. Since the output torque is regenerative torque and assumes a negative value, the lower the position on the vertical axis, the larger the magnitude (absolute value) of the output torque. The vertical and horizontal axes of the graphs shown in FIG. 16 to FIG. 18 have the same scales. FIG. 16 and FIG. 17 show an output torque characteristic exhibited in the case where only the normal control mode is used without changeover to the high speed rotation control mode. FIG. 16 shows an output torque characteristic exhibited in the case where there is no delay in control. FIG. 17 shows an output torque characteristic exhibited in the case where there is delay in control. Factors causing such delay in control include delay in detection of the electrical angle, delay in detection of the motor current, delay in computation of the motor control values, and delay in output of the PWM control signals.

In the normal control mode, when the rotation speed exceeds a predetermined rotational speed $\omega$1, the assist ECU 100 performs field weakening control with reference to the field weakening map. Since the field weakening map provides a value of the d-axis instruction current id* slightly smaller than the optimum value, the torque that the motor 20 can output becomes smaller than the theoretical maximum torque.

In the case where there is delay in control, the output torque begins to fluctuate when the rotational speed reaches $\omega$2, and completely diverges when the rotational speed reaches $\omega$3. In the region where the output waveform is not shown, the motor 20 outputs a torque in the opposite direction.

In the case where there is no delay in control, when the rotational speed reaches $\omega$3, mutual interference occurs between d-axis current control and q-axis current control which are performed in the d-q coordinate system, thereby causing an oscillating response.

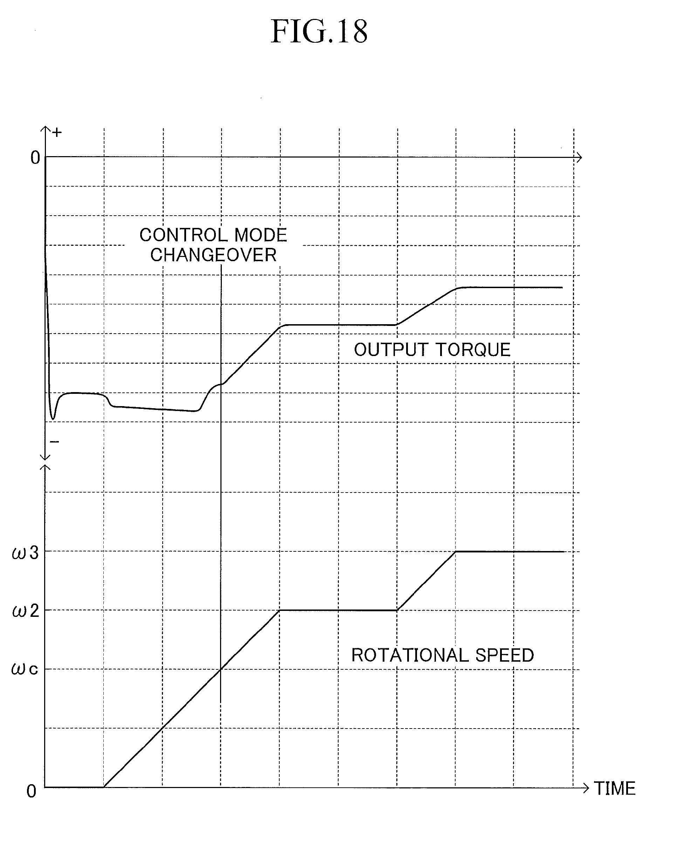

FIG. 18 shows a graph showing an output characteristic exhibited when the motor control of the present embodiment is performed. During this simulation, the control mode is switched to the high speed rotation control mode at the rotational speed $\omega$c. This characteristic graph shows that, according to the present embodiment, the output torque does not oscillate and control is performed steadily even when the motor 20 is rotating at high speed. In addition, this characteristic graph also shows that the torque output at high rotational speed is larger than the torque output when the motor 20 is driven in the normal control mode. In addition, it has been confirmed that, in the high speed rotation control mode, the output torque characteristic representing change in the output torque with the rotational speed becomes close to the theoretical maximum torque characteristic shown in FIG. 26.

The above-described electric power steering apparatus of the present embodiment can cause the motor 20 to generate a large torque even when it rotates at high speed, because the mode in which the motor 20 is controlled is switched from the normal control mode to the high speed rotation mode in the case where the motor 20 starts rotating at high speed. Thus, even if the steering wheel 11 is rotated suddenly due to a reverse input from the road surface, the rotated steering wheel 11 can be braked in a satisfactory manner by causing the motor 20 to generate a large negative torque. In addition, by virtue of this braking operation, the noise generated when the rack end member collides with the stopper can be reduced, thereby mitigating a feeling of discomfort felt by the driver. In addition, since this feature can be implemented without changing the computing power of the microcomputer of the assist ECU 100, the performance of the motor 20, and the performance of the motor drive circuit 30, no additional cost is required.

Moreover, the sign changeover section 154 determines whether or not the direction in which the steering torque Tr is applied coincides with the rotation direction corresponding to the polarity of the rotational speed $\omega$r and sets the gain to 1 or -1 in accordance with the direction in which torque is to be generated. Accordingly, even when feedback control is incorporated, not only torque in the negative direction but also torque in the positive direction can be generated properly. Consequently, in the case where a driver performs steering operation at a speed higher than the ordinary operation speed for emergency avoidance, etc., the control mode can also be changed from the normal control mode to the high speed rotation control mode in order to generate a large assist torque in the direction in which the driver rotates the steering wheel 11 for emergency avoidance, etc. Thus, the driver can easily perform steering operation for emergence avoidance, etc.

In addition, in the high speed rotation control mode, since the threshold $\omega$th decreases as the rotational acceleration |A| or the steering torque |Tr| increases, both the braking of the steering wheel 11 and the suppression of generation of operating noise can be realized at the same time.

Next, there will be described an electric power steering apparatus of a second embodiment. The electric power steering apparatus of the second embodiment is identical with the electric power steering apparatus of the above-described embodiment (hereinafter, referred to the first embodiment) expect that a first high speed rotation control mode or a second high speed rotation control mode is selected, as the high speed rotation control mode employed in the first embodiment, in accordance with the rotational speed |$\omega$r|.

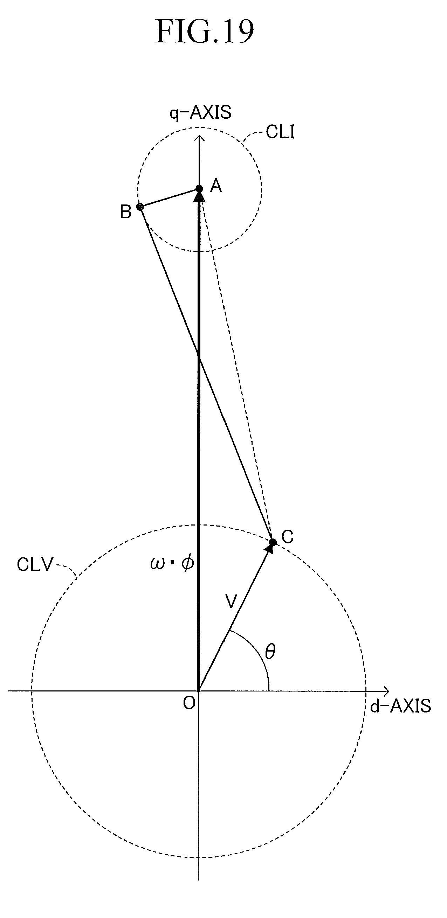

The counter electromotive force increases with the rotational speed of the motor 20. Therefore, when the motor 20 is rotating at extremely high speed, as shown in FIG. 19, the distance between the point A and the voltage limit circle CLV in the voltage vector diagram increases. As a result, the distance AC is little affected by the phase angle θ. Consequently, even if the phase angle θ changes somewhat, the motor current changes very little, which makes rigorous current control unnecessary. Accordingly, in the second embodiment, a second threshold ωth2, which is greater than the threshold ωth used in the first embodiment (hereinafter, referred to the first threshold ωth1), is stored in the ROM of the assist ECU 100, and when the rotational speed |ωr| exceeds the second threshold ωth2, the assist ECU 100 selects the second high speed rotation control mode in which the computation amount per control period is small. In this second high speed rotation control mode, a control period shorter than that of the high speed rotation control mode of the first embodiment is employed in consideration of the reduction of the computation amount per control period.

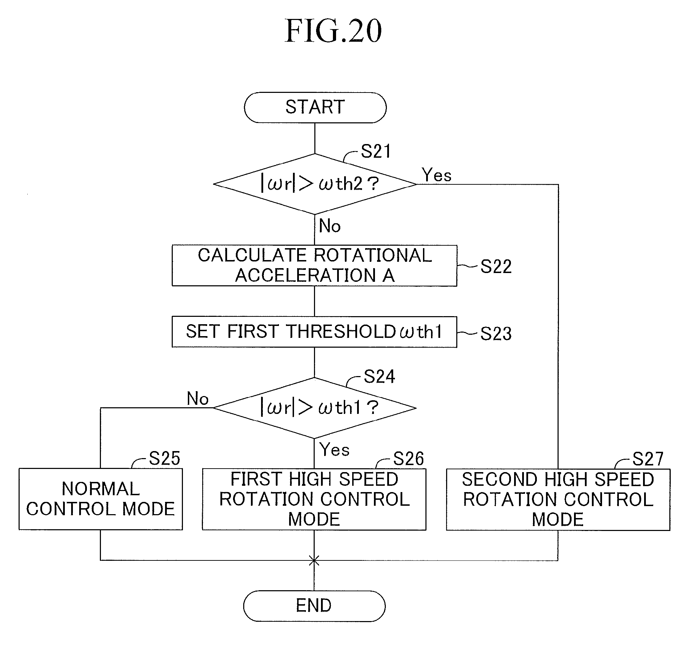

First, control mode changeover will be described. FIG. 20 shows a mode changeover control routine of the second embodiment. The mode changeover control routine is stored, as a control program, in the ROM of the microcomputer of the assist ECU 100, and is repeatedly executed at predetermined intervals when the ignition key is held at the ON position.

Upon starting the mode changeover control routine, in step S21, the assist ECU 100 determines whether or not the rotational speed |ωr| is greater than the second threshold ωth2. This second threshold ωth2 is a fixed value which is set such that it is greater than the first threshold ωth1. In the case where the rotational speed |ωr| is equal to or less than the second threshold ωth2 (S21: No), the assist ECU 100 performs the processing of steps S22 and S23, which is similar to that of the steps S11 and S12 of the first embodiment. Specifically, in step S22, the assist ECU 100 computes the rotational acceleration A of the motor 20; and, in step S23, the assist ECU 100 computes the first threshold ωth1 corresponding to the rotational speed |ωr| with reference to the threshold setting map shown in FIG. 13 or FIG. 14. Subsequently, in step S24, the assist ECU 100 determines whether or not the rotational speed |ωr| is greater than the first threshold ωth1. If the rotational speed |ωr| is equal to or less than the threshold ωth1 (S24: No), in step S25, the assist ECU 100 selects the normal control mode. If the rotational speed |ωr| is greater than the first threshold ωth1 (S24: Yes), in step S26, the assist ECU 100 selects the first high speed rotation control mode. This first high speed rotation control mode is the same as the high speed rotation control mode of the first embodiment.

In the case where the assist ECU 100 has determined in step S21 that the rotational speed |ωr| is greater than the second threshold ωth2, the assist ECU 100 selects the second high speed rotation control mode in step S27. After selecting a control mode, the assist ECU 100 ends the current execution of the mode changeover control routine. The assist ECU 100 repeatedly executes the mode changeover control routine at the predetermined intervals, to thereby consistently select a control mode corresponding to the rotational speed |ωr|. Notably, in the present embodiment, the second threshold ωth2 is a fixed value. However, the second threshold ωth2 may be changed within a range where it is greater than the first threshold ωth1. For example, the second threshold ωth2 may be set to a value obtained by multiplying the first threshold ωth1 by a coefficient K (>1).

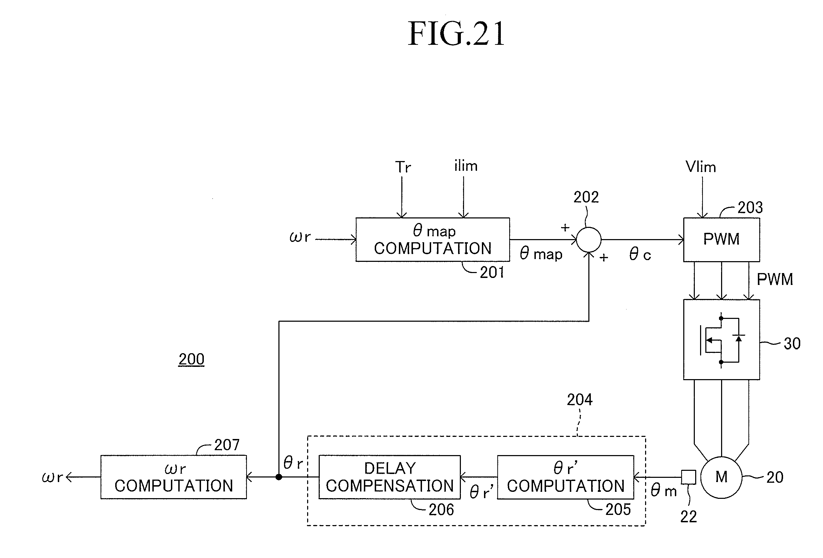

Next, there will be described the processing performed in the second high speed rotation control mode. FIG. 21 is a functional block diagram showing functions which are realized by program control performed by the microcomputer of the assist ECU 100 in the second high speed rotation control mode. The assist ECU 100 has an open loop control section 200 which operates in the second high speed rotation control mode. The open loop control section 200 includes a phase angle computation section 201, an addition section 202, a PWM signal generation section 203, an electrical angle computation section 204, and a rotational speed computation section 207. The processing performed by the open loop control section 200 is repeated at control intervals corresponding to a predetermined control period T3 (computation period) by making use of a timer. The control period T3 is set shorter than the control period T2 of the 2-axis current control section 110 which operates in the first high speed rotation control mode.

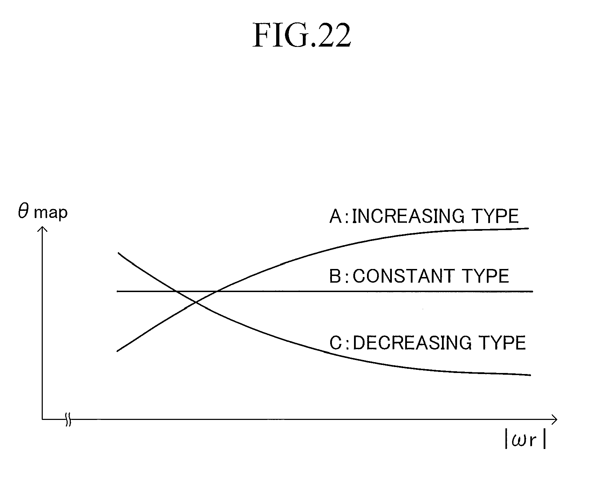

The phase angle computation section 201 computes a phase angle instruction value θmap from a rotational speed |ωr| with reference to a phase angle setting map stored therein. The phase angle instruction value θmap is a target value of the phase angle of the voltage vector in relation to the d-axis. The phase angle setting map is data indicating the relation between the rotational speed |ωr| of the motor 20 and the phase angle instruction value θmap, and can be created from the above-described expression (5). As shown in FIG. 22, there are three types of phase angle setting maps. Map A is an increasing-type map showing the relation between the rotational speed |ωr| and the phase angle instruction value θmap, wherein θmap increases with |ωr|. Map B is a constant-type map showing the relation between the rotational speed |ωr| and the phase angle instruction value θmap, wherein θmap is constant irrespective of |ωr|. Map C is a decreasing-type map showing the relation between the rotational speed |ωr| and the phase angle instruction value θmap, wherein θmap decreases as |ωr| increases. These three types of phase angle setting maps can be used in accordance with the inductance L and counter voltage constant $\phi$ of the motor 20 and the current limit value of the motor drive circuit 30.

Next, there will be considered how the lengths of line segments OA and BC are affected by the rotational speed ω in FIG. 19. The line segment OA represents the magnitude of voltage ω$\phi$, and the line segment BC represents the magnitude of voltage ωLi. Accordingly, the lengths of line segments OA and BC are proportional to the rotational speed ω. When the counter voltage ω$\phi$ is extremely higher than the voltage limit value (i.e., the motor is rotating at high speed), the line segment OA is nearly parallel to the line segment BC. Accordingly, characteristics can be classified by the magnitude relation between $\phi$ and Li.

When $\phi$ is greater than Li ($\phi$ > Li), the counter voltage $\omega\phi$ increases faster than the voltage $\omega$Li as the rotational speed $\omega$ increases. Therefore, the voltage phase $\theta$ must be increased toward 90° (q-axis) as the rotational speed $\omega$ increases. If the voltage phase $\theta$ decreases as the rotational speed $\omega$ increases, the length of the segment BC increases and the motor current exceeds the current limit value.

Meanwhile, when $\phi$ is less than Li ($\phi$ < Li), the voltage $\omega$Li increases faster than the counter voltage $\omega\phi$ as the rotational speed $\omega$ increases. Therefore, the voltage phase must be decreased toward 0° (d-axis) as the rotational speed $\omega$ increases.

Accordingly, preferably, the increasing-type map A is used when $\phi$ > Li; the constant-type map B is used when $\phi$Li $\approx$ Li; and the decreasing-type map C is used when $\phi$ < Li.

In the present embodiment, when the motor 20 is rotating at high speed, control is performed such that the absolute value |i| of the motor current becomes equal to the current limit value ilim. Therefore, it is only necessary to substitute the current limit value ilim for i of Li in the above-described relational expression. Accordingly, it is sufficient to store a single pattern of phase angle setting map in the ROM of the assist ECU 100. Incidentally, when the system is configured such that the current limit value ilim changes due to power restriction or heat generation restriction, preferably, a plurality of phase angle setting maps corresponding to a plurality of current limit values ilim are stored, and one of the phase angle setting maps is selected in accordance with an input instruction which represents the present current limit value ilim.

In the present embodiment, the open loop control section 200 is configured so as to generate torque in the negative direction. However, in the case where the open loop control section 200 is configured so as to generate not only torque in the negative direction but also torque in the positive direction, preferably, the steering torque Tr is input to the phase angle computation section 201 in addition to the rotational speed $\omega$r, which enables the phase angle computation section 201 to determine the direction of the torque generated by the motor 20. The characteristic of the phase angle setting map used to generate torque in the positive direction is opposite to the characteristic of the phase angle setting map used to generate torque in the negative direction. That is, in the case where the increasing-type map A is used to generate torque in the negative direction, the decreasing-type map C is used to generate torque in the positive direction; and in the case where the decreasing-type map C is used to generate torque in the negative direction, the increasing-type map A is used to generate torque in the positive direction.

The phase angle computation section 201 outputs to the addition section 202 the phase angle instruction value $\theta$map computed with reference to the phase angle setting map. The addition section 202 adds together the phase angle instruction value $\theta$map and the electrical angle $\theta$r of the motor 20 which is output from the electrical angle computation section 204, thereby computing a voltage phase instruction value $\theta$c (= $\theta$map+$\theta$r) which corresponds to the value obtained through conversion of the phase angle instruction value $\theta$map to the phase angle on the armature. The electrical angle computation section 204 includes an angle computation section 205 and a delay compensation section 206. The angle computation section 205 receives the detection signal output from the rotational angle sensor 22 and representing the rotational angle $\theta$m of the motor 20, and computes the electrical angle $\theta$r' of the motor 20. The delay compensation section 206 compensates the electrical angle $\theta$r' by the angle proportional to the rotational speed of the motor 20 taking into account the delay in computation time which is required for detection of the electrical angle of the motor 20.

The electrical angle computation section 204 outputs, as an electrical angle $\theta$r, the electrical angle compensated by the delay compensation section 206 to the addition section 202 and the rotational speed computation section 207. The rotational speed computation section 207 differentiates, with respect to time, the electrical angle $\theta$r in order to compute the rotational speed $\omega$r of the motor 20, and outputs the computed rotational speed $\omega$r to the phase angle computation section 201.

The voltage phase instruction value $\theta$c computed by the addition section 202 is output to the PWM signal generation section 203. The PWM signal generation section 203 generates, in accordance with the voltage phase instruction value $\theta$c, PWM control signals which are set such that the output voltages of the motor drive circuit 30 become the sinusoidal wave voltages expressed by the following expression (17), and outputs the PWM control signals to the switching elements 31 to 36. In this case, the amplitude V of each sinusoidal wave voltage is also determined from the voltage limit value of the motor drive circuit 30 as in the case of the first embodiment.

$$\begin{cases} V_u = V \sin(\theta_{map} + \theta_r) \\[2ex] V_v = V \sin\left(\theta_{map} + \theta_r - \dfrac{2\pi}{3}\right) \\[2ex] V_w = V \sin\left(\theta_{map} + \theta_r - \dfrac{4\pi}{3}\right) \end{cases} \quad \cdots (17)$$

The switching elements 31 to 36 operate in response to the PWM control signals output from the PWM signal generation section 203. Thus, the motor drive circuit 30 outputs three-phase sinusoidal wave voltages.

In the case of the electric power steering apparatus of the second embodiment, if the rotational speed $|\omega|$ exceeds the first threshold $\omega th1$ due to a large reverse input applied to the steering mechanism at the time when a tire bumps against a road surface projection, the control mode changes from the normal control mode to the first high speed rotation control mode. Consequently, while maintaining the motor drive voltage at the voltage limit value, the assist ECU 100 controls the motor drive circuit 30 such that the absolute value of the current flowing through the motor 20 becomes the maximum value within the limited range, thereby causing the motor 20 to generate a large torque in the negative direction. As a result, a force for stopping rotation of the steering wheel 11 is applied. However, in the case where the reverse input is large, the rotational speed may increase further. To prevent this, when the rotational speed $|\omega r|$ exceeds the second threshold $\omega th2$, the assist ECU 100 changes the control mode from the first high speed rotation control mode to the second high speed rotation control mode and sets the voltage phase of the motor drive circuit 30 by performing only open loop control without performing feedback control. In addition, since the phase angle instruction value $\theta map$ is obtained from the map, the microcomputer's computation amount per control period becomes small. Hence, it is possible to make the control period T3 of the open loop control section 200 (the second high speed rotation control mode) shorter than the control period T2 of the current absolute value control section 150 (the first high speed rotation control mode). Thus, even in a situation where the motor 20 is rotating at extremely high speed, delay in control is reduced and stability of control is improved. Consequently, the electric power steering apparatus of the second embodiment can produce large torque even when the motor 20 is caused to rotate at extremely high speed.

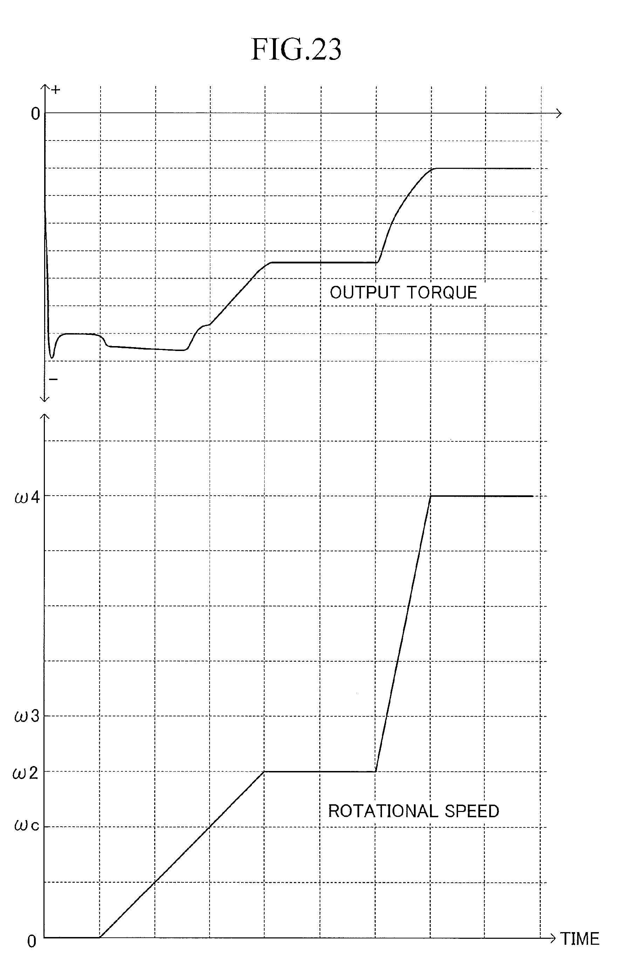

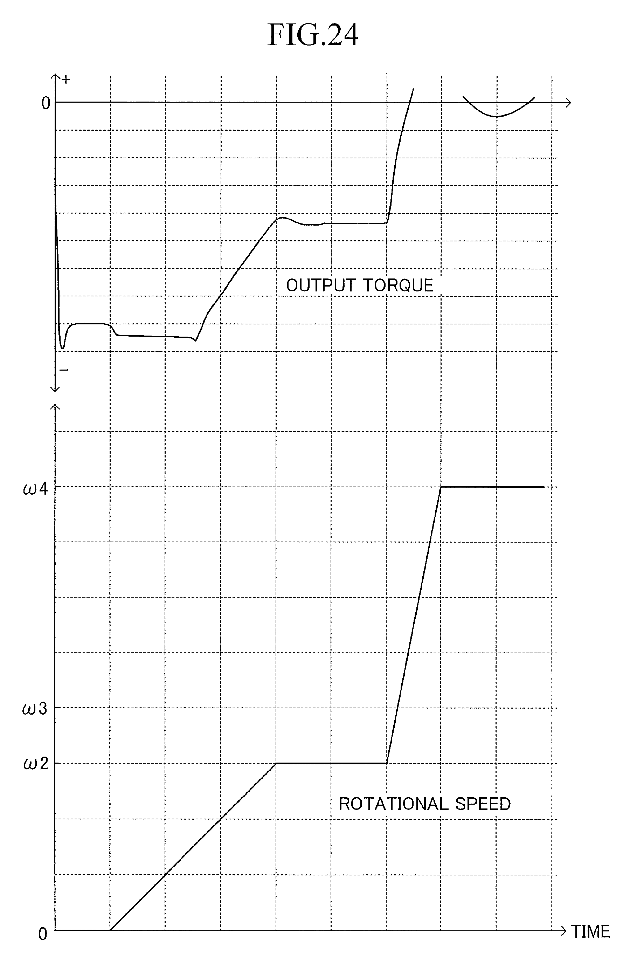

Next, there will be described the output torque characteristic of the motor 20 of the second embodiment. FIG. 23 and FIG. 24 are graphs showing an output torque characteristic obtained, through simulation, for the case where the motor 20 is rotated at high speed by an external force. Specifically, FIG. 23 is a graph of characteristic exhibited when the motor 20 is driven and controlled by changing the control mode in accordance with the scheme employed in the second embodiment, and FIG. 24 is a graph of characteristic exhibited when the motor 20 is driven and controlled only in the normal control mode without changing the control mode.

The vertical and horizontal axes of the characteristic graphs shown in FIG. 23 and FIG. 24 have the same scales as those of the characteristic graphs shown in FIG. 16 to FIG. 18. Accordingly, the characteristic graphs in FIG. 23 and FIG. 24 show the simulation results obtained by rotating the motor 20 up to a range of extremely high rotational speed. Notably, the characteristic graph shown in FIG. 24 shows the simulation result obtained when there is no delay in control.

As can be understood from the above-described characteristic graphs, in the second embodiment, the motor can output constant torque even in the range of extremely high rotational speed where the rotational speed reaches $\omega 4$. It has been confirmed that this torque is close to the torque indicated by the theoretical maximum torque characteristic graph shown in FIG. 26. Meanwhile, when the motor 20 is driven and controlled using only the normal control mode, the motor 20 cannot output torque at the rotational speed $\omega 4$ even if there is no delay in control.

Next, there will be described an electric power steering apparatus of a third embodiment. Except for part of processing, the configuration of the electric power steering apparatus of the third embodiment is the same as that of the electric power steering apparatus of the first embodiment.

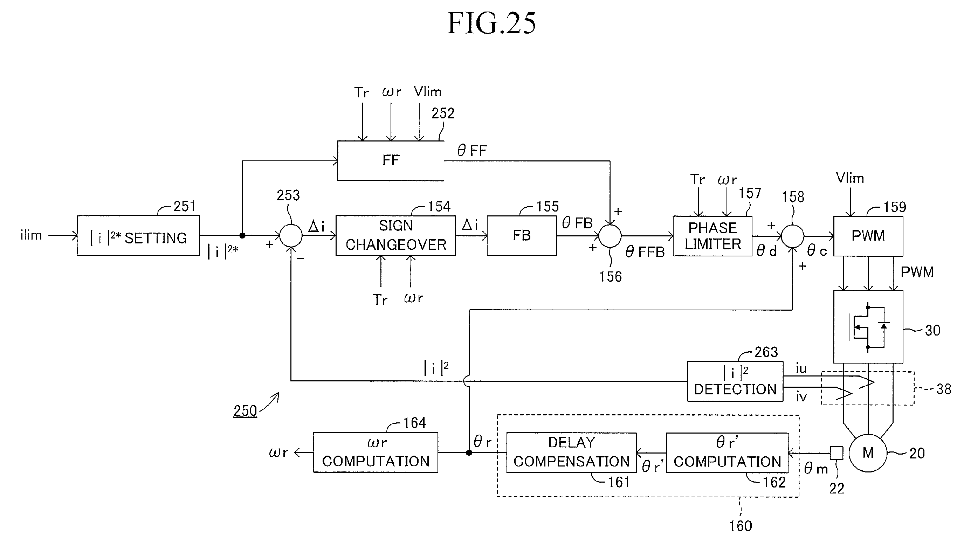

FIG. 25 is a functional block diagram showing functions which are realized by program control performed by the microcomputer of the assist ECU 100 in the high speed rotation control mode of the third embodiment. The assist ECU 100 has a current absolute value control section 250 which operates in the high speed rotation control mode. The current absolute value control section 250 of the third embodiment includes a target current setting section 251, a feedforward control section 252, a deviation computation section 253, and a current detection section 263 instead of the target current setting section 151, the feedforward control section 152, the deviation computation section 153, and the current detection section 163 of the current absolute value control section 150 of the first embodiment. Since other functional sections of the current absolute value control section 250 of the third embodiment are the same as those of the first embodiment, these functional sections are denoted by the same reference numerals as those used for the corresponding functional sections of the first embodiment, and description of these functional sections is omitted.

In the first embodiment, the absolute value of current is set as a target value; however, in the third embodiment, the square of the absolute value of current is used as a target value so as to reduce the computation load of the microcomputer. Notably, the third embodiment differs from the first embodiment only in computation; in other words, they are the same in the point that they have the current absolute value control section which computes a phase angle which makes the absolute value of the motor current equal to the target current absolute value.

The target current setting section 251 sets, as a target value, the square of the absolute value of the current flowing through the motor 20, and outputs the set target current absolute value $|i|^{2*}$. This target current absolute value $|i|^{2*}$ corresponds to the square of the target current absolute value $|i|^{*}$ used in the first embodiment.

The current detection section 263 computes the square of the actual current absolute value $|i|$ from the three-phase currents iu, iv, and iw (= -(iu+iv)), which has been detected by the current sensor 38, and outputs the computation result as an actual current absolute value $|i|^2$. The actual current absolute value $|i|^2$ is calculated from the following expression (18). Therefore, computation of a square root is not required.

$$\left|i\right|^2 = i_u{}^2 + i_v{}^2 + i_w{}^2 = 2(i_u{}^2 + i_v{}^2 + i_u i_v) \qquad \cdots (18)$$

The feedforward control section 252 receives the target current absolute value $|i|^{2*}$, the steering torque Tr, the rotational speed ωr, and the voltage limit value Vlim, and computes the phase angle OFF of the output voltage of the motor drive circuit 30 using the relation expressed by the above-described expression (5). In this case, by means of substituting the target current absolute value $|i|^{2*}$ into the left side of the expression (5), computation of the square can be omitted.

The deviation computation section 253 receives the target current absolute value $|i|^{2*}$ output from the target current setting section 251 and the actual current absolute value $|i|^2$ output from the current detection section 263, and computes the deviation Δi (= $|i|^{2*}-|i|^2$) therebetween. The sign (+ or -) of this deviation Δi is the same as that of the deviation Δi in the first embodiment. Hence, the feedback control performed using this deviation Δi is the same as that of the first embodiment.

In the high speed rotation control mode of the third embodiment, the number of computations for obtaining a square root and square can be reduced, thereby reducing the computer's computation amount per control period. Consequently, the control period used in the high speed rotation control mode can be reduced further as compared with the first embodiment. As a result, delay in control is reduced and stability of control is improved.

The electric power steering apparatuses of the above-described embodiments have been described above. The present invention is not limited to the above-described embodiments, and various modifications can be employed within the scope of the present invention.

For example, in the above-described embodiments, in the case where the high speed rotation control mode is selected, feedforward control is performed in combination with feedback control. However, the voltage phase can be adjusted using either of the feedforward control and feedback control in order to control operation of the motor drive circuit 30 such that the absolute value of the motor current becomes equal to the target current absolute value.

In addition, the above-described embodiments are configured such that the threshold ωth of the rotational speed is changed when the motor 20 is determined to be in a high speed rotation state. However, they may be configured such that the threshold ωth is fixed.

In the above-described embodiments, the threshold ωth is set such that the high speed rotation control mode is selected when the driver performs steering operation at a speed higher than the ordinary operation speed for emergency avoidance, etc. However, the threshold ωth can be set to a larger value so as to prevent the control mode from being switched to the high speed rotation control mode even when the driver performs steering operation for emergency prevention. In this case, motor control is performed in the high speed rotation control mode only when reverse input is applied.

The electric power steering apparatuses of the above-described embodiments are of a rack assist type in which the motor 20 is assembled to the rack bar 14. However, the electric power steering apparatuses may be of a column assist type in which the motor 20 is assembled to the steering shaft 12.

**Claims**

1. An electric power steering apparatus comprising a permanent magnet synchronous motor which is provided in a steering mechanism and which generates a steering assist torque; a drive circuit which outputs a three-phase drive voltage to the motor so as to drive the motor; and a 2-axis current control section which computes, through use of a d-q coordinate system whose d-axis extends along a magnetic field generated by a permanent magnet of the motor and whose q-axis extends perpendicular to the d-axis, drive instruction values for controlling a d-axis current which generates a magnetic field in the d-axis direction and a q-axis current which generates a magnetic field in the q-axis direction, and outputs drive control signals corresponding to the drive instruction values to the drive circuit, the electric power steering apparatus being **characterized by** comprising:

a high speed rotation state detection section which detects a high speed rotation state in which the motor is rotating at a high speed which is not detected during ordinary steering operation;

a current absolute value control section which computes a phase angle, in relation to the d-axis, of an output voltage vector of the drive circuit represented by the d-q coordinate system, at which the absolute value of motor current flowing through the motor becomes equal to a target current absolute value in a state in which the absolute value of the output voltage vector is set to a voltage limit value of the drive circuit, and outputs to the drive circuit the drive control signals which correspond to the computed phase angle and the voltage limit value; and

control changeover section which operates the current absolute value control section in place of the 2-axis current control section when the high speed rotation state is detected by the high speed rotation state detection section.

2. An electric power steering apparatus according to claim 1, wherein the current absolute value control section comprises:

a rotational speed detection section which detects the rotational speed of the motor; and

a phase angle computation section which computes the phase angle of the output voltage vector in relation to the d-axis on the basis of the target current absolute value, the voltage limit value of the drive circuit, and the rotational speed of the motor detected by the rotational speed detection section.

3. An electric power steering apparatus according to claim 2, wherein the current absolute value control section comprises:

a current detection section which detects the absolute value of the motor current; and

a feedback control section which adjusts the phase angle computed by the phase angle computation section, on the basis of a deviation between the target current absolute value and the absolute value of the motor current detected by the current detection section.

4. An electric power steering apparatus according to claim 3, wherein the feedback control section comprises a direction determination section which determines whether or not a direction in which the motor is rotating coincides with a direction in which torque is generated by the motor, wherein, in the case where the rotation direction of the motor coincides with the direction in which the torque is generated, the feedback control section increases the phase angle when the detected absolute value of the motor current is smaller than the target current absolute value and decreases the phase angle when the detected absolute value of the motor current is greater than the target current absolute value, and, in the case where the rotation direction of the motor does not coincide with the direction in which the torque is generated, the feedback control section decreases the phase angle when the detected absolute value of the motor current is smaller than the target current absolute value and increases the phase angle when the detected absolute value of the motor current is greater than the target current absolute value.

5. An electric power steering apparatus according to any one of claims 1 to 4, wherein the target current absolute value is set to the current limit value of the drive circuit.

6. An electric power steering apparatus according to any one of claims 1 to 5, wherein the high speed rotation state detection section comprises a rotational speed detection section which detects the rotational speed of the motor, and the high speed rotation state detection section determines that the motor is in the high speed rotation state when the detected rotational speed is higher than a reference speed.

7. An electric power steering apparatus according to claim 6, further comprising a reference speed changing section which decreases the reference speed as the rotational acceleration of the motor increases.

8. An electric power steering apparatus according to claim 6, further comprising a reference speed changing section which decreases the reference speed as a steering torque input to the steering mechanism increases.

9. An electric power steering apparatus according to any one of claims 6 to 8, further comprising:

a second high speed rotation state detection section which detects a state in which the rotational speed detected by the rotational speed detection section is higher than a second reference speed which is higher than the reference speed; and

a second phase angle computation section which stores a map defining the relation between the rotational speed of the motor and the phase angle of the output voltage vector in relation to the d-axis and which computes the phase angle from the rotational speed of the motor detected by the rotational speed detection section, while referring to the map, when the second high speed rotation state detection section detects the state in which the rotational speed of the motor is higher than the second reference speed.

# FIG.1

EP 2 555 415 A1

FIG.2

# FIG.3

EP 2 555 415 A1

FIG.4

FIG.5

# FIG.6

q-AXIS

INTERFERENCE TERM
$j \cdot \omega \cdot L \cdot i$

$R \cdot i$

VOLTAGE VECTOR V

COUNTER VOLTAGE
$\omega \cdot \phi$

d-AXIS

# FIG.7

q-AXIS

$\omega \cdot L \cdot id$

$j \cdot \omega \cdot L \cdot i$

$R \cdot i$

$R \cdot iq$

V

vq

$\omega \cdot \phi$

$\omega \cdot L \cdot iq$ $-R \cdot id$ d-AXIS

vd

# FIG.8

CURRENT LIMIT CIRCLE CLI

q-AXIS

B

$R \cdot i$

$R \cdot iq$

A

$j \cdot \omega \cdot L \cdot i$

$\omega \cdot \phi$

$\omega \cdot L \cdot id$

VOLTAGE LIMIT
CIRCLE CLI

C

V

vq

$\omega \cdot L \cdot iq$

$R \cdot id$

d-AXIS

vd

# FIG.9

# FIG.10

# FIG.11

PHASE LIMITER RANGE WHEN TORQUE IS POSITIVE $\theta n \sim 180°$

PHASE LIMITER RANGE WHEN TORQUE IS NEGATIVE $0 \sim 90°$

# FIG.12

START

CALCULATE ROTATIONAL ACCELERATION A — S11

SET THRESHOLD $\omega$th — S12

S13

$|\omega r| > \omega$th? — No

Yes

HIGH SPEED ROTATION CONTROL MODE — S15

NORMAL CONTROL MODE — S14

END

# FIG.13

# FIG.14

# FIG.15

EP 2 555 415 A1

# FIG.16

OUTPUT TORQUE

ROTATIONAL SPEED

ω3

ω2

ω1

0

TIME

# FIG.17

# FIG.18

CONTROL MODE
CHANGEOVER

OUTPUT TORQUE

ω3

ω2

ωc

ROTATIONAL SPEED

TIME

# FIG.19

# FIG.20

START

S21
$|\omega r| > \omega th2$?  —Yes

No

CALCULATE ROTATIONAL ACCELERATION A  —S22

SET FIRST THRESHOLD $\omega th1$  —S23

S24
No  $|\omega r| > \omega th1$?

Yes

S25 NORMAL CONTROL MODE

S26 FIRST HIGH SPEED ROTATION CONTROL MODE

S27 SECOND HIGH SPEED ROTATION CONTROL MODE

END

# FIG.21

# FIG.22

# FIG.23

OUTPUT TORQUE

ROTATIONAL SPEED

TIME

# FIG.24

OUTPUT TORQUE

ROTATIONAL SPEED

TIME

FIG.25

# FIG.26

<table>
<tr><td colspan="2" align="center">**INTERNATIONAL SEARCH REPORT**</td><td>International application No.<br>PCT/JP2010/056110</td></tr>
</table>

| A. CLASSIFICATION OF SUBJECT MATTER |
|---|
| *H02P6/08*(2006.01)i, *B62D5/04*(2006.01)i, *B62D6/00*(2006.01)i, *B62D101/00*<br>(2006.01)n, *B62D113/00*(2006.01)n, *B62D119/00*(2006.01)n |
| According to International Patent Classification (IPC) or to both national classification and IPC |

| B. FIELDS SEARCHED |
|---|
| Minimum documentation searched (classification system followed by classification symbols)<br>H02P6/08, B62D5/04, B62D6/00, B62D101/00, B62D113/00, B62D119/00 |
| Documentation searched other than minimum documentation to the extent that such documents are included in the fields searched<br>　Jitsuyo Shinan Koho　　　　　1922-1996　Jitsuyo Shinan Toroku Koho　1996-2010<br>　Kokai Jitsuyo Shinan Koho　1971-2010　Toroku Jitsuyo Shinan Koho　1994-2010 |
| Electronic data base consulted during the international search (name of data base and, where practicable, search terms used)<br>　WPI |

| C. DOCUMENTS CONSIDERED TO BE RELEVANT |

| Category* | Citation of document, with indication, where appropriate, of the relevant passages | Relevant to claim No. |
|---|---|---|
| A | JP 2008-68666 A　(NSK Ltd.),<br>27 March 2008 (27.03.2008),<br>entire text<br>(Family: none) | 1-9 |
| A | JP 6-8839 A　(Koyo Seiko Co., Ltd.),<br>18 January 1994 (18.01.1994),<br>entire text<br>(Family: none) | 1-9 |
| A | WO 2000/027024 A1　(Toshiba Corp.),<br>11 May 2000 (11.05.2000),<br>entire text<br>& GB 2347283 A　　　　　& AU 9651398 A<br>& CN 1284213 A | 1-9 |

| ☒　Further documents are listed in the continuation of Box C. | ☐　See patent family annex. |
|---|---|

| * Special categories of cited documents: | "T" later document published after the international filing date or priority<br>date and not in conflict with the application but cited to understand<br>the principle or theory underlying the invention |
|---|---|
| "A" document defining the general state of the art which is not considered<br>to be of particular relevance | |
| "E" earlier application or patent but published on or after the international<br>filing date | "X" document of particular relevance; the claimed invention cannot be<br>considered novel or cannot be considered to involve an inventive<br>step when the document is taken alone |
| "L" document which may throw doubts on priority claim(s) or which is<br>cited to establish the publication date of another citation or other<br>special reason (as specified) | "Y" document of particular relevance; the claimed invention cannot be<br>considered to involve an inventive step when the document is<br>combined with one or more other such documents, such combination<br>being obvious to a person skilled in the art |
| "O" document referring to an oral disclosure, use, exhibition or other means | |
| "P" document published prior to the international filing date but later than<br>the priority date claimed | "&" document member of the same patent family |

| Date of the actual completion of the international search<br>　23 July, 2010 (23.07.10) | Date of mailing of the international search report<br>　03 August, 2010 (03.08.10) |
|---|---|
| Name and mailing address of the ISA/<br>　Japanese Patent Office | Authorized officer |
| Facsimile No. | Telephone No. |

**INTERNATIONAL SEARCH REPORT**

International application No.

PCT/JP2010/056110

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2002-142483 A  (Daikin Industries, Ltd.),<br>17 May 2002 (17.05.2002),<br>entire text<br>(Family: none) | 1-9 |
| A | JP 2008-141868 A  (Toyota Motor Corp.),<br>19 June 2008 (19.06.2008),<br>entire text<br>(Family: none) | 1-9 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001187578 A
- JP 2009247147 A
- JP 2009247181 A